# EUROPÄISCHE PATENTSCHRIFT

(11) **EP 4 544 086 B1**
(45) Veröffentlichungstag und Bekanntmachung des Hinweises auf die Patenterteilung: **14.10.2026**
(21) Anmeldenummer: 23734593.9
(22) Anmeldetag: 21.06.2023
(51) Int. Cl.: C21B 13/00, C22B 5/12, C22B 5/14, F24S 90/00, F27B 7/34, C21B 11/00, C21B 13/08, C21B 15/00, F27D 17/00

(54) **VERFAHREN UND VORRICHTUNG ZUR REDUKTION VON METALLOXID MITTELS EINES UNTER NUTZUNG VON SOLARTHERMIE ERZEUGTEN REDUZIERENDEN GASES ODER GASGEMISCHES**
METHOD AND DEVICE FOR REDUCING METAL OXIDE USING A REDUCING GAS OR GAS MIXTURE GENERATED WITH THE USE OF SOLAR THERMAL ENERGY
PROCÉDÉ ET DISPOSITIF POUR LA RÉDUCTION D'OXYDE DE MÉTAUX À L'AIDE D'UN GAZ RÉDUCTEUR OU D'UN MÉLANGE GAZEUX GÉNÉRÉ PAR L'UTILISATION DE L'ÉNERGIE SOLAIRE THERMIQUE

(30) Priorität: 24.06.2022 DE 102022115857; 27.03.2023 DE 102023107616
(43) Veröffentlichungstag der Anmeldung: 30.04.2025
(73) Patentinhaber: SMS Group GmbH, 41069 Mönchengladbach (DE)
(72) Erfinder: KLEIN, Carsten Andreas, 40237 Düsseldorf (DE); REIFFERSCHEID, Markus, 41352 Korschenbroich (DE); FELDHAUS, Stephan, 8610 Uster (CH); PAPALIA, Katia, 16149 Genua (IT); OUDEHINKEN, Heinz-Jürgen, 45149 Essen (DE); Krull, Jan, 17019 Varazze (SV) (IT)
(74) Vertreter: Richly & Ritschel Patentanwälte PartG mbB
(86) Internationale Anmeldenummer: PCT/EP2023/066799
(87) Internationale Veröffentlichungsnummer: WO 2023/247627

(56) Entgegenhaltungen:
- WO-A2-2011/116141
- US-A1- 2006 188 433
- US-A1- 2011 135 566
- US-A1- 2016 208 362

## Beschreibung

Die vorliegende Erfindung betrifft ein Verfahren zur Reduktion von Metalloxid mittels eines reduzierenden Gases oder Gasgemisches, welches unter Verwendung von mittels konzentrierter Sonnenstrahlung gewonnener Wärmeenergie erzeugt wird. Ferner betrifft die vorliegende Erfindung eine Vorrichtung zur Reduktion von Metalloxid mittels eines reduzierenden Gases oder Gasgemisches, welches unter Verwendung von mittels konzentrierter Sonnenstrahlung gewonnener Wärmeenergie erzeugt wird.

Zur Reduktion von Metalloxid in metallerzeugenden Anlagen werden dem Metalloxid Reduktionsmittel zugeführt. Die Erzeugung der Reduktionsmittel selber ist energieintensiv und führt folglich bei Nutzung von nicht erneuerbaren Energiequellen (z.B. Öl, Gas-, Kohlekraftwerke) zu einer erheblichen Produktion von Kohlenstoffdioxid. Beispielsweise werden Wasserstoff und Kohlenstoffmonoxid als Reduktionsmittel verwendet. Ein üblicher Herstellungsprozess von Wasserstoff und Kohlenstoffmonooxid ist die Dampfreformierung, bei der Methan und Wasser als Ausgangsstoffe unter Zufuhr von Wärmeenergie in Kohlenstoffmonoxid und Wasserstoff umgewandelt werden. Weiterhin reagiert das Methan mit Sauerstoff unter Freisetzung von Energie zu Kohlenstoffdioxid und Wasserstoff.

Im Hochofenprozess wird beispielsweise Eisenoxid zu Roheisen reduziert, wobei als Reduktionsmittel hauptsächlich Kohlenstoffmonooxid dient, das durch Verbrennung von Koks im Hochofen selbst erzeugt wird. Hierbei werden erhebliche Mengen von Kohlendioxid erzeugt.

Im Lichtbogenofen kann dem zu reduzierenden Eisenoxid beispielsweise Wasserstoff als Reduktionsmittel zugeführt werden. Auch bei der Produktion von Wasserstoff fallen erhebliche Mengen von Kohlendioxid an, wenn zu dessen Herstellung keine erneuerbaren Energiequellen verwendet werden.

Elektrischer Strom wird heutzutage auf vielfältige Weise erzeugt. Hierzu werden erneuerbare und nicht-erneuerbare Energiequellen verwendet. Zu den erneuerbaren Energiequellen gehören insbesondere Sonnenenergie, Wasserkraft und Windenergie. Sonnenenergie wird mittels Solarzellen in elektrischen Strom gewandelt, der anschließend bedarfsgerecht eingesetzt werden kann.

Zu den nicht erneuerbaren Energiequellen gehören Kernenergie, Öl-, Gas-, Kohlekraftwerke.

Die US 2011/135566 A1 beschreibt eine Vorrichtung zur thermischen Wasserstoffherstellung in einer Gas-Festphasenreaktion. Hierzu wird durch Verwendung von Wärmeenergie unter Veränderung eines Oxidationszustandes eines Metalloxids Kohlendioxid reduziert. Dabei wird in einem thermischen Prozess zunächst Wasserstoff durch die Spaltung von Wasserdampf mittels eines Metalloxids erzeugt. In einem nachgelagerten Schritt wird das Metalloxid bei einer höheren Temperatur wieder reduziert. Dabei wird ein Reaktor in einer Solarthermieanlage mittels konzentrierter Sonnenstrahlung erhitzt.

Die US 2016/208362 A1 beschreibt ein System und ein Verfahren zur kohlenstoffbasierten Reduktion von Metalloxiden. Das System weist einen Reaktor mit einem Reaktionsbehälter auf, der eine Heizvorrichtung zur Erwärmung von in dem Reaktionsbehälter befindlichen Metalloxid-Pellets aufweist. Die Heizvorrichtung kann den Reaktionsbehälter mittels konzentrierter Sonnenstrahlung erhitzen.

Die US 2006/1884733 A1 beschreibt ein Verfahren zur Reduktion von Metalloxiden zur Wasserstoffherstellung in einem Hochtemperatur Solar Aerosol Strömungsreaktor sowie einen entsprechenden Solar-Aerosol-Strömungsreaktor.

Die US 2008/086946 A1 beschreibt ein Verfahren zum Umsetzen von Biomassepartikeln, um Reaktionsprodukte zu bilden, die Wasserstoff und Kohlenmonoxid umfassen.

Die WO 2011/116141 A2 beschreibt unter anderem eine Reduktion von Eisenoxid in einem Hochofen mittels Wasserstoff, der zuvor durch Elektrolyse von Wasser hergestellt wurde, wobei die notwendige Energie durch einen Dampf bereitgestellt wurde, der zuvor mittels Wärmeenergie ausgehend von einem MgF₂-Energiespeicher erwärmt wurde, wobei der MgF₂-Energiespeicher mittels konzentrierter Sonnenstrahlung erwärmt wurde.

Die Veröffentlichung "Forschungsprogramm Wasserstoff" beschreibt einen solarthermischen Reaktor zur Herstellung von Wasserstoff und Synthesegas unter Verwendung von Ceriumoxid (CeO2) als Redoxkeramik.

Die Veröffentlichung "Combined ZnO reduction and methane reforming for co-production of pure Zn and syngas in a prototype solar thermochemical reactor" beschreibt eine kombinierte Zinkoxid Reduktion (ZnO) und Synthesegasherstellung mittels konzentrierter Sonnenstrahlung. Dazu wird in einem Solarofen mit einer Aluminiumkavität, in welcher die Sonnenstrahlung durch einen Parabolspiegel konzentriert wird und ZnO unter Zugabe von Methan und Stickstoff zu Zink reduziert wird.

Der vorliegenden Erfindung liegt die Aufgabe zugrunde, ein Verfahren zur Reduktion von Metalloxid bereitzustellen, mittels dem im Vergleich zu aus dem Stand der Technik bekannten Verfahren eine erhebliche Reduktion der Emission von Treibhausgasen und insbesondere eine Reduktion der Emission von Kohlendioxid realisiert ist.

Die der vorliegenden Erfindung zugrundeliegende Aufgabe wird durch ein Verfahren mit den in Anspruch 1 angegebenen Merkmalen gelöst. Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zur Reduktion von Metalloxid mittels eines reduzierenden Gases oder Gasgemisches gelöst, wobei das Verfahren einen Verfahrensschritt des Zuführens von zumindest einem Ausgangsstoff in einen Reaktor aufweist. Ferner weist das Verfahren einen Verfahrensschritt des Erzeugens des reduzierenden Gases oder Gasgemisches durch Erwärmen des zumindest einen Ausgangsstoffs mittels Wärmeenergie im Reaktor auf, wobei die Wärmeenergie zumindest teilweise mittels konzentrierter Sonnenstrahlung gewonnen wird. Weiterhin weist das Verfahren einen Verfahrensschritt des Zusammenführens des zu reduzierenden Metalloxids und des zur Reduktion des zu reduzierenden Metalloxids verwendeten reduzierenden Gases oder Gasgemisches auf.

Das erfindungsgemäße Verfahren weist den Vorteil auf, dass beim Erzeugen des reduzierenden Gases oder Gasgemisches erheblich weniger Kohlenstoffdioxid generiert wird. Somit wird beim Erzeugen von Metall durch Reduktion des Metalloxids ebenfalls weniger Kohlenstoffdioxid erzeugt.

Aufgrund der Nutzung von konzentrierter Sonnenstrahlung und somit aufgrund der Nutzung von Solarthermie weist das erfindungsgemäße Verfahren einen hohen Wirkungsgrad hinsichtlich der Erzeugung des reduzierenden Gases oder Gasgemisches auf. Aufgrund der Verwendung von konzentrierter Sonnenstrahlung können im Bereich von oder mehr als 30% der Strahlungsenergie der konzentrierten Sonnenstrahlung zur Erwärmung des zumindest einen Ausgangsstoffs genutzt werden. Dieser Wirkungsgrad ist erheblich höher als bei einer Nutzung von Photovoltaik. Denn bei einer Nutzung von Photovoltaik wird Sonnenlicht zur Erzeugung von elektrischer Energie genutzt, wobei im industriellen Maßstab nutzbare Photovoltaikmodule einen Wirkungsgrad von circa 25% aufweisen. Folglich wird lediglich 25% der Energie der Sonnenstrahlung in elektrische Energie umgewandelt. Diese elektrische Energie muss noch in Wärmeenergie umgewandelt werden, was den Gesamtwirkungsgrad bis zur Erwärmung des zumindest einen Ausgangsstoffs nochmals reduziert.

Unter einer Reduktion von Metalloxid ist erfindungsgemäß eine chemische Reduktion von Metalloxid zu verstehen.

Vorzugsweise ist das Verfahren derart ausgebildet, dass als Metalloxid ein Metalloxid verwendet wird, das ausgewählt ist aus der Gruppe bestehend aus Eisenoxid, Aluminiumoxid, Kupferoxid, Magnesiumoxid, Zinnoxid, Zinkoxid und Mischungen davon. Hinsichtlich der der Zusammensetzung des Metalloxids bestehen somit keine Beschränkungen.

Wenn das Metalloxid Eisenoxid aufweist, dann kann das Eisenoxid beispielsweise in Form von Eisenerz vorliegen. In diesem Fall ist es auch möglich, die vorliegende Erfindung als Verfahren zum Reduzieren von Eisenerz mittels eines reduzierenden Gases oder Gasgemisches zu bezeichnen.

Der Verfahrensschritt, gemäß dem das reduzierende Gas oder Gasgemisch durch Erwärmen des zumindest einen Ausgangsstoffs mittels Wärmeenergie im Reaktor erzeugt wird, wobei die Wärmeenergie zumindest teilweise mittels konzentrierter Sonnenstrahlung gewonnen wird, umfasst erfindungsgemäß auch, dass zusätzlich auch andere Energie (beispielsweise elektrische Energie) zur Erzeugung des reduzierenden Gases oder Gasgemisches genutzt werden kann.

In einer bevorzugten Ausführung des Verfahrens wird die zum Erwärmen des zumindest einen Ausgangsstoffs verwendete Wärmeenergie in Gänze mittels konzentrierter Sonnenstrahlung gewonnen.

Vorzugsweise ist das Verfahren derart ausgebildet, dass Wärmeenergie des durch die Redoxreaktion erzeugten Reaktionsprodukts zur Vorwärmung des zumindest einen Ausgangsstoffs und/oder des zu reduzierenden Metalloxids und/oder des zur Reduktion des zu reduzierenden Metalloxids erzeugten Gases oder Gasgemisches und/oder des Reaktors verwendet wird.

Das entsprechend ausgebildete Verfahren weist eine verbesserte Energieeffizienz auf. Denn durch Nutzung der Wärmeenergie des durch die Redoxreaktion erzeugten Reaktionsprodukts zur Vorwärmung des zumindest einen Ausgangsstoffs und/oder des zu reduzierenden Metalloxids und/oder des zur Reduktion des zu reduzierenden Metalloxids erzeugten Gases oder Gasgemisches ist weniger Wärmeenergie zur Erwärmung des zumindest einen Ausgangsstoffs des Metalloxids und/oder des Gases oder Gasgemisches nötig, die aus konzentrierter Sonnenstrahlung gewonnen wird.

Die Wärmeenergie des aus der Reaktion des Metalloxids und des Gases oder Gasgemisches hervorgehende Reaktionsprodukts wird beispielweise mittels eines Wärmetauchers auf ein Wärmetransportfluid übertragen, welches dann zur Erwärmung des zumindest einen Ausgangsstoffs und/oder des Metalloxids und/oder des Gases oder Gasgemisches verwendet wird.

Wenn das aus der Reaktion des Metalloxids und des Gases oder Gasgemisches Wasser in Form von Wasserdampf als Reaktionsprodukt hervorgehet, wird vorzugsweise auch die Kondensationswärme des Wasserdampfs zur Vorwärmung des zumindest einen Ausgangsstoffs und/oder des Metalloxids und/oder des Gases oder Gasgemisches verwendet.

Vorzugsweise ist das Verfahren derart ausgebildet, dass das Wasser, das durch die Redoxreaktion des zu reduzierenden Metalloxids mit dem aus dem zumindest einen Ausgangsstoff erzeugten Gas oder Gasgemisch erzeugt wird, zur Gewinnung von Wasserstoff genutzt wird.

Das entsprechend ausgebildete Verfahren weist den Vorteil auf, dass das bei der Redoxreaktion erzeugte Wasser bzw. der bei der Redoxreaktion erzeugte Wasserdampf aufgrund der Stöchiometrie der Redoxreaktion genau im passenden Verhältnis zum eingesetzten Metalloxid steht, so dass eine Erzeugung von Wasserstoff aus dem als Produkt der Redoxreaktion anfallenden Wassers / Wasserdampfs gerade die erforderliche Menge an Wasserstoff erzeugt wird, die zur Fortführung des Prozesses - also der Reduktion von weiterem Metalloxid - erforderlich ist.

Vorzugsweise ist das Verfahren derart ausgebildet, dass der zumindest eine Ausgangsstoff auf eine Temperatur im Bereich zwischen 200°C und 1600°C erwärmt wird. Weiter vorzugsweise ist das Verfahren derart ausgebildet, dass der zumindest eine Ausgangsstoff auf eine Temperatur im Bereich zwischen 300°C und 1550°C erwärmt wird. Nochmals weiter vorzugsweise ist das Verfahren derart ausgebildet, dass der zumindest eine Ausgangsstoff auf eine Temperatur im Bereich zwischen 400°C und 1525°C erwärmt wird. Nochmals weiter vorzugsweise ist das Verfahren derart ausgebildet, dass der zumindest eine Ausgangsstoff auf eine Temperatur im Bereich zwischen 500°C und 1500°C erwärmt wird.

Die Erwärmung des zumindest einen Ausgangsstoffs auf Temperaturen in diesem Temperaturbereiche erfolgt vorzugsweise im Wesentlichen oder ausschließlich mittels der durch konzentrierte Sonnenstrahlung gewonnenen Wärmeenergie.

Vorzugsweise ist das Verfahren derart ausgebildet, dass zusätzlich zu der mittels konzentrierter Sonnenstrahlung gewonnenen Wärmeenergie weitere Wärmeenergie mittels zumindest eines Brenners und/oder mittels zumindest eines Wärmetauschers und/oder mittels zumindest einer elektrischen Heizung gewonnen wird und zum Erwärmen des zumindest einen Ausgangsstoffs verwendet wird.

Die zusätzliche Wärmeenergie kann zeitlich phasenweise oder zeitlich kontinuierlich zum Erwärmen des zumindest einen Ausgangsstoffs verwendet werden.

Das entsprechend ausgebildete Verfahren weist den Vorteil auf, dass die Erzeugung des reduzierenden Gases oder Gasgemisches auch in Zeiträumen sichergestellt ist, in denen beispielsweise nicht ausreichend mittels Solarthermie gewonnene Wärmeenergie zur Erzeugung des reduzierenden Gases oder Gasgemisches zur Verfügung steht. Somit weist das entsprechend ausgebildete Verfahren eine verbesserte Ausfallsicherheit auf.

Vorzugsweise ist das Verfahren derart ausgebildet, dass mehr als ein Ausgangsstoff, also z.B. zwei, drei, vier oder mehr Ausgangsstoffe dem Reaktor zugeführt werden.

Erfindungsgemäß erfolgt der Verfahrensschritt des Erzeugens des reduzierenden Gases oder Gasgemisches durch Erwärmen des zumindest einen Ausgangsstoffs mittels Wärmeenergie in einem Reaktor.

Der Verfahrensschritt des Zusammenführens des zu reduzierenden Metalloxids und des zur Reduktion des zu reduzierenden Metalloxids verwendeten reduzierenden Gases oder Gasgemisches erfolgt in einer Einrichtung zum Zusammenführen des reduzierenden Gases oder Gasgemisches mit dem zu reduzierenden Metalloxid, die als Lichtbogenofen und/oder als Schachtofen und/oder als Wirbelschichtreaktor ausgebildet ist. Die Einrichtung zum Zusammenführen des reduzierenden Gases oder Gasgemisches mit dem zu reduzierenden Metalloxid ist vorzugsweise eine sich von dem Reaktor unterscheidende, d.h. eine vom Reaktor separate Einrichtung.

Vorzugsweise wird beim Verfahrensschritt des Erzeugens des reduzierenden Gases oder Gasgemisches durch Erwärmen des zumindest einen Ausgangsstoffs mittels Wärmeenergie in einem Reaktor der zumindest eine Ausgangsstoff für eine Dauer von mehr als eine Sekunde, vorzugsweise für eine Dauer von mehr als zehn Sekunden, weiter vorzugsweise für eine Dauer von mehr als sechzig Sekunden erwärmt.

Vorzugsweise ist das Verfahren derart ausgebildet, dass der zumindest eine Ausgangsstoff ausgewählt ist aus der Gruppe bestehend aus Erdgas, Wasser, Kohlenstoffdioxid, Abgas einer Metallhütte, Biogas, aus der Erdatmosphäre abgeschiedenes Kohlenstoffdioxid, bei der Zementproduktion erzeugtes Kohlenstoffdioxid, metallurgisches Gas eines Stahlwerks, Koksofengas.

Das entsprechend ausgebildete Verfahren weist den Vorteil auf, dass zur Erzeugung des reduzierenden Gases oder Gasgemisches zumindest ein Ausgangsstoff verwendet wird, der zum Treibhauseffekt negativ beiträgt und daher als klimaschädlich bezeichnet wird. Dieser zumindest eine Ausgangsstoff wird durch die Erwärmung mittels durch konzentrierter Sonnenstrahlung gewonnener Wärmeenergie in ein reduzierendes Gas oder Gasgemisch umgewandelt, das wiederum zur Reduktion des Metalloxids verwendet wird, so dass beispielsweise bei Industrieprozessen anfallende Ausgangsstoffe, die eine klimaschädliche Wirkung aufweisen, unschädlich gemacht werden.

Vorzugsweise ist das Verfahren derart ausgebildet, dass das reduzierende Gas oder Gasgemisch Synthesegas ist.

Synthesegas kann beispielsweise Kohlenstoffmonooxid und/oder Wasserstoff aufweisen.

Das Verfahren ist derart ausgebildet, dass der Verfahrensschritt des Zusammenführens des zu reduzierenden Metalloxids und des reduzierenden Gases oder Gasgemisches in einem Lichtbogenofen und/oder in einem Schachtofen und/oder in einem Wirbelschichtreaktor erfolgt.

Vorzugsweise ist das Verfahren derart ausgebildet, dass im Verfahrensschritt des Zuführens von zumindest einem Ausgangsstoff in den Reaktor zumindest Methan und Wasser als Ausgangsstoffe dem Reaktor zugeführt werden, und dass im Verfahrensschritt des Erzeugens des reduzierenden Gases oder Gasgemisches Kohlenstoffmonoxid und Wasserstoff als reduzierendes Gasgemisch und Kohlenstoffdioxid erzeugt werden.

Vorzugsweise wird das Wasser in Form von Wasserdampf zugeführt.

Weiter vorzugsweise ist das Verfahren derart ausgebildet, dass im Verfahrensschritt des Erzeugens des reduzierenden Gases oder Gasgemisches die Ausgangsstoffe so erwärmt werden, dass bei einem Gemisch der Ausgangsstoffe, des reduzierenden Gasgemisches und des Kohlenstoffdioxids die Volumenkonzentration des Methans niedriger als 5 Volumenprozent, die Konzentration von Wasserdampf niedriger als 8 Volumenprozent und ein Molverhältnis der Summe des Kohlenstoffmonoxids und des Wasserstoffs zur Summe des Wasserdampfs und Kohlenstoffdioxids größer als 7 ist.

Das entsprechend ausgebildete Verfahren ist insbesondere für Hochöfen geeignet, d.h., wenn der Verfahrensschritt des Zusammenführens des zu reduzierendes Metalloxids und des zur Reduktion des zu reduzierenden Metalloxids verwendeten reduzierenden Gases oder Gasgemisches in einem Hochofen erfolgt.

Weiter vorzugsweise ist das Verfahren derart ausgebildet, dass im Verfahrensschritt des Erzeugens des reduzierenden Gases oder Gasgemisches die Ausgangsstoffe so erwärmt werden, dass bei einem Gemisch der Ausgangsstoffe, des reduzierenden Gasgemisches und des Kohlenstoffdioxids die Volumenkonzentration des Methans niedriger als 5 Volumenprozent und ein Molverhältnis der Summe des Kohlenstoffmonoxids und des Wasserstoffs zur Summe des Wasserdampfs und Kohlenstoffdioxids größer als 10 ist.

Das entsprechend ausgebildete Verfahren ist insbesondere für Lichtbogenöfen geeignet, d.h., wenn der Verfahrensschritt des Zusammenführens des zu reduzierendes Metalloxids und des zur Reduktion des zu reduzierenden Metalloxids verwendeten reduzierenden Gases oder Gasgemisches in einem Lichtbogenofen erfolgt.

Vorzugsweise ist das Verfahren derart ausgebildet, dass im Verfahrensschritt des Zuführens von zumindest einem Ausgangsstoff in den Reaktor werden zumindest Methan und Kohlenstoffdioxid als Ausgangsstoffe dem Reaktor zugeführt werden, und dass im Verfahrensschritt des Erzeugens des reduzierenden Gases oder Gasgemisches werden Kohlenstoffmonoxid und Wasserstoff als reduzierendes Gasgemisch erzeugt werden.

Vorzugsweise ist das Verfahren derart ausgebildet, dass dieses einen Verfahrensschritt zum Erwärmen eines Primär-Wärmetransportfluids mittels konzentrierter Sonnenstrahlung und einen Verfahrensschritt zum Übertragen von Wärmeenergie des Primär-Wärmetransportfluids auf den zumindest einen Ausgangsstoff im Reaktor aufweist.

Das entsprechend ausgebildete Verfahren weist den Vorteil auf, dass das Erwärmen des zumindest einen Ausgangsstoffs nochmals effizienter möglich ist, da das Primär-Wärmetransportfluid derart ausgebildet bzw. ausgewählt sein kann, dass dieses besonders effizient mittels konzentrierter Sonnenstrahlung erwärmt werden kann. Folglich wird zum Erwärmen des zumindest einen Ausgangsstoffs nochmals weniger und gegebenenfalls kein Kohlendioxid erzeugt.

Das Primär-Wärmetransportfluid wird mittels der konzentrierten Sonnenstrahlung vorzugsweise auf eine Temperatur im Bereich zwischen 500°C bis 1700°C, vorzugsweise im Bereich zwischen 700°C bis 1700°C, weiter vorzugsweise im Bereich zwischen 800°C bis 1650°C, weiter vorzugsweise im Bereich zwischen 900°C bis 1650°C, weiter vorzugsweise im Bereich zwischen 900°C bis 1600°C, weiter vorzugsweise im Bereich zwischen 1100°C bis 1650°C, weiter vorzugsweise im Bereich zwischen 1200°C bis 1600°C, weiter vorzugsweise im Bereich zwischen 1300°C bis 1600°C, weiter vorzugsweise im Bereich zwischen 1400°C bis 1550°C, weiter vorzugsweise im Bereich zwischen 1400°C bis 1500°C erwärmt.

Beispielsweise ist das Verfahren derart ausgebildet, dass beim Verfahrensschritt des Übertragens der Wärmeenergie des Primär-Wärmetransportfluids auf den zumindest einen Ausgangsstoff die Wärmeenergie des Primär-Wärmetransportfluids vor der Übertragung auf den zumindest einen Ausgangsstoff nicht in elektrische Energie umgewandelt wird.

Folglich wird die (konzentrierte) Sonnenstrahlung vor Erwärmung des zumindest einen Ausgangsstoffs nicht in elektrische Energie (z.B. mittels Solarzellen) umgewandelt. Ferner wird auch die Wärmeenergie des Primär-Wärmetransportfluids nicht in elektrische Energie umgewandelt (beispielsweise mittels eines Generators), um anschließend eine Erwärmungseinrichtung mit der elektrischen Energie zu versorgen.

Das entsprechend ausgebildete Verfahren weist den Vorteil auf, dass das Primär-Wärmetransportfluid effizienter durch die konzentrierte Sonnenstrahlung erwärmt wird. Folglich wird auch der zu erwärmende zumindest eine Ausgangsstoff effizienter erwärmt, so dass mittels der zur Verfügung stehenden konzentrierten Sonnenstrahlung eine größere Menge an Ausgangsstoff erwärmt werden kann.

Weiter beispielsweise ist das Verfahren derart ausgebildet, dass ein Teilstrom des Primär-Wärmetransportfluids zur Erzeugung von elektrischer Energie abgezweigt wird, wobei die elektrische Energie beispielsweise mittels eines Generators erzeugt wird. Diese elektrische Energie kann beispielsweise zur Versorgung einzelner Anlagenteile mit elektrischer Energie verwendet werden.

Vorzugsweise ist das Verfahren derart ausgebildet, dass als Primär-Wärmetransportfluid zumindest ein Gas verwendet wird, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Es ist auch möglich, dass das Primär-Wärmetransportfluid eine Salzschmelze aufweist oder eine Salzschmelze ist, wobei die Salzschmelze beispielsweise NaNO₃ und/oder KNO₃ aufweist. Weiter vorzugsweise weist das Primär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass das Erwärmen des Primär-Wärmetransportfluids unmittelbar in einer von konzentrierter Sonnenstrahlung beschienenen Fluiderwärmungseinrichtung einer Solarthermieanlage erwärmt wird.

Beispielsweise strömt das Primär-Wärmetransportfluid durch die Fluiderwärmungseinrichtung, in die die von Reflektoren reflektierte Sonnenstrahlung konzentriert wird. Dabei wechselwirkt das Primär-Wärmetransportfluid unmittelbar mit der konzentrierten Sonnenstrahlung und wird von dieser erwärmt.

Vorzugsweise ist das Verfahren derart ausgebildet, dass ein Primär-Wärmetransportfluid verwendet wird, welches keine Festkörperbestandteile, insbesondere keine Keramikbestandteile aufweist.

Als Primär-Wärmetransportfluid kann beispielsweise ein Gas verwendet werden. Ein Primär-Wärmetransportfluid ohne Festkörperbestandteile weist den Vorteil auf, dass eine Transportvorrichtung (z.B. Rohre bzw. ein Rohrsystem) zum Transport des Wärmetransportfluids einem geringeren Verschleiß ausgesetzt ist. Ferner können sich keine Festkörperbestandteile in Bereichen der Transportvorrichtung ablagern, in denen kleinere Transportgeschwindigkeiten des Wärmetransportfluids vorliegen.

Es ist insbesondere besonders vorteilhaft, wenn das Primär-Wärmetransportfluid keine Keramikbestandteile, insbesondere kein Keramikpulver transportiert. Denn Keramikbestandteile führen zu einem besonders hohen Verschleiß der Transportvorrichtung.

Vorzugsweise weist das Verfahren einen Verfahrensschritt des Übertragens von Wärmeenergie des Primär-Wärmetransportfluids auf eine Wärmespeichereinrichtung und ein Verfahrensschritt des Übertragens von Wärmeenergie der Wärmespeichereinrichtung auf den zumindest einen Ausgangsstoff im Reaktor auf.

Das entsprechend ausgebildete Verfahren weist den Vorteil auf, dass die Wärmeenergie, die mittels der konzentrierten Sonnenstrahlung gewonnen wird, auch in Zeitperioden verwendet werden kann, in denen keine oder eine vergleichsweise geringere Sonnenstrahlung zur Verfügung steht. Somit ist eine gleichmäßigere Erwärmung des zumindest einen Ausgangsstoffs ermöglicht.

Beispielsweise ist das Verfahren derart ausgebildet, dass zum Übertragen von Wärmeenergie der Wärmespeichereinrichtung auf den zumindest einen Ausgangsstoff das Primär-Wärmetransportfluid verwendet wird.

Als Wärmespeichereinrichtung kann beispielsweise ein Reservoir des Primär-Wärmetransportfluids dienen. Ferner kann beispielsweise ein sich von dem Primär-Wärmetransportfluid unterscheidendes Wärmetransportfluid (beispielsweise eine Salzschmelze, beispielsweise NaNO₃ und/oder KNO₃ aufweisend) als Wärmespeichereinrichtung verwendet werden. Ferner kann beispielsweise ein Festkörper als Wärmespeichereinrichtung verwendet werden. Hinsichtlich der Ausgestaltung des Festkörpers bestehen keine Einschränkungen. Der Festkörper kann beispielsweise Steine und/oder Beton und/oder Metallkörper oder dergleichen aufweisen.

Ferner ist es auch im Sinne des erfindungsgemäßen Verfahrens, dass Wärmeenergie des Primär-Wärmetransportfluids auf ein Sekundär-Wärmetransportfluid und/oder auf ein Tertiär-Wärmetransportfluid übertragen wird, wobei anschließend Wärmeenergie des Sekundär-Wärmetransportfluids und/oder des Tertiär-Wärmetransportfluids auf eine Wärmespeichereinrichtung übertragen wird. Somit wird die Wärmeenergie des Primär-Wärmetransportfluids mittelbar auf die Wärmespeichereinrichtung übertragen.

Vorzugsweise ist das Verfahren derart ausgebildet, dass die Übertragung von Wärmeenergie des Primär-Wärmetransportfluids auf die Wärmespeichereinrichtung in einem anderen Zeitfenster als die Übertragung von Wärmeenergie der Wärmespeichereinrichtung auf den zumindest einen Ausgangsstoff erfolgt. Beispielsweise ist das Verfahren derart ausgebildet, dass die Übertragung von Wärmeenergie des Primär-Wärmetransportfluids auf die Wärmespeichereinrichtung zeitlich vor der Übertragung von Wärmeenergie der Wärmespeichereinrichtung auf den zumindest einen Ausgangsstoff erfolgt.

Vorzugsweise weist das Verfahren einen Verfahrensschritt des Übertragens von Wärmeenergie des Primär-Wärmetransportfluids auf ein Sekundär-Wärmetransportfluid in einer Wärmetauschereinrichtung und einen Verfahrensschritt des Übertragens von Wärmeenergie des Sekundär-Wärmetransportfluids auf den zumindest einen Ausgangsstoff im Reaktor auf.

Das entsprechend ausgebildete Verfahren weist den Vorteil auf, dass die Wärmeenergie des Primär-Wärmetransportfluids für die Erwärmung des zumindest einen Ausgangsstoffs, der auf eine bedeutend niedrigere Temperatur als eine Temperatur des Primär-Wärmetransportfluids erwärmt werden soll, verbessert nutzbar ist. Denn die Temperatur des Sekundär-Wärmetransportfluids ist niedriger als die Temperatur des Primär-Wärmetransportfluids.

Wie bereits oben beschrieben kann die Wärmespeichereinrichtung mittels des Sekundär-Wärmetransportfluids erwärmt werden. Ferner ist es auch möglich, dass eine erste Wärmespeichereinrichtung mittels des Primär-Wärmetransportfluids und eine zweite Wärmespeichereinrichtung mittels des Sekundär-Wärmetransportfluids erwärmt wird. Folglich wäre die erste Wärmespeichereinrichtung in einem Primär-Fluidkreislauf und die zweite Wärmespeichereinrichtung in einem Sekundär-Fluidkreislauf angeordnet.

Beispielsweise weist das Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das Sekundär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass als Sekundär-Wärmetransportfluid ein Wärmetransportfluid verwendet wird, dessen Wärmekapazität größer ist als die Wärmekapazität des Primär-Wärmetransportfluids.

Das entsprechend ausgebildete Verfahren weist den Vorteil auf, dass die mittels konzentrierter Sonnenstrahlung gewonnene Wärmeenergie über größere Distanzen mit geringeren Wärmeverlusten zu einer Erwärmungseinrichtung (beispielsweise ein Reaktor oder ein Ofen), mittels der der zumindest eine Ausgangsstoff erwärmt werden soll, transportierbar ist.

Vorzugsweise ist das Verfahren derart ausgebildet, dass als Sekundär-Wärmetransportfluid ein Wärmetransportfluid verwendet wird, dessen spezifische Wärmekapazität größer ist als die spezifische Wärmekapazität des Primär-Wärmetransportfluids.

Vorzugsweise ist das Verfahren derart ausgebildet, dass als Sekundär-Wärmetransportfluid ein Wärmetransportfluid verwendet wird, dessen Dichte größer ist als die Dichte des Primär-Wärmetransportfluids.

Vorzugsweise ist das Verfahren derart ausgebildet, dass als Sekundär-Wärmetransportfluid ein Wärmetransportfluid verwendet wird, dessen Produkt aus spezifischer Wärmekapazität und Dichte größer ist als das Produkt der spezifischen Wärmekapazität und Dichte des Primär-Wärmetransportfluids.

Unter der Dichte der jeweiligen Wärmetransportfluide ist deren Masse pro Volumeneinheit zu verstehen.

Vorzugsweise weist das Verfahren einen Verfahrensschritt des Transportierens des Primär-Wärmetransportfluids zu der Wärmetauschereinrichtung über eine erste Wegstrecke auf, wobei in der Wärmetauschereinrichtung Wärmeenergie von dem Primär-Wärmetransportfluid auf das Sekundär-Wärmetransportfluid übertragen wird. Ferner weist das Verfahren einen Verfahrensschritt des Transportierens des Sekundär-Wärmetransportfluids zum Reaktor über eine zweite Wegstrecke auf, die größer als die erste Wegstrecke ist, wobei in dem Reaktor Wärmeenergie von dem Sekundär-Wärmetransportfluid auf den zumindest einen Ausgangsstoff übertragen wird.

Das entsprechend ausgebildete Verfahren ermöglicht einen effizienten Transport der mittels konzentrierter Sonnenstrahlung erzeugten Wärmeenergie mit geringen Wärmeenergieverlusten über eine große Distanz. Folglich ermöglicht das entsprechend ausgebildete Verfahren, dass eine Fluiderwärmungseinrichtung, die dazu ausgebildet ist, ein Primär-Wärmetransportfluid mittels konzentrierter Sonnenstrahlung zu erwärmen, einen größeren **Ab**stand zum Reaktor, in dem der zumindest einen Ausgangsstoff mittels der durch konzentrierte Sonnenstrahlung gewonnenen Energie erwärmt wird, aufweisen kann.

Dies ist insbesondere vorteilhaft, wenn die konzentrierte Sonnenstrahlung einer Solarthermieanlage zum Erwärmen des Primär-Wärmetransportfluids verwendet wird. Ein Solarturmkraftwerk weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass ein Reaktor zum Erwärmen des zumindest einen Ausgangsstoffs üblicherweise außerhalb einer Fläche, in der die Reflektoreinrichtungen angeordnet sind, platziert werden kann. Folglich ermöglicht das beschriebene Verfahren eine Vergrößerung des Abstandes der Fluiderwärmungseinrichtung zu dem Reaktor zum Erwärmen des zumindest einen Ausgangsstoffs.

Vorzugsweise ist die erste Wegstrecke kürzer als 1000 Meter. Weiter vorzugsweise ist die erste Wegstrecke kürzer als 800 Meter. Weiter vorzugsweise ist die erste Wegstrecke kürzer als 600 Meter. Weiter vorzugsweise ist die erste Wegstrecke kürzer als 400 Meter. Weiter vorzugsweise ist die erste Wegstrecke kürzer als 200 Meter.

Vorzugsweise beträgt die erste Wegstrecke zwischen 100 Meter und 1000 Meter. Weiter vorzugsweise beträgt die erste Wegstrecke zwischen 110 Meter und 900 Meter. Weiter vorzugsweise beträgt die erste Wegstrecke zwischen 120 Meter und 800 Meter. Weiter vorzugsweise beträgt die erste Wegstrecke zwischen 130 Meter und 700 Meter. Weiter vorzugsweise beträgt die erste Wegstrecke zwischen 140 Meter und 600 Meter. Weiter vorzugsweise beträgt die erste Wegstrecke zwischen 150 Meter und 500 Meter. Weiter vorzugsweise beträgt die erste Wegstrecke zwischen 160 Meter und 400 Meter. Weiter vorzugsweise beträgt die erste Wegstrecke zwischen 170 Meter und 300 Meter. Weiter vorzugsweise beträgt die erste Wegstrecke zwischen 180 Meter und 200 Meter.

Vorzugsweise weist das Verfahren einen Verfahrensschritt des Übertragens von Wärmeenergie des Sekundär-Wärmetransportfluids auf ein Tertiär-Wärmetransportfluid in einer dritten Wärmetauschereinrichtung und einen Verfahrensschritt des Übertragens von Wärmeenergie des Tertiär-Wärmetransportfluids auf den zumindest einen Ausgangsstoff in dem Reaktor auf.

Beispielsweise wird als Tertiär-Wärmetransportfluid ein Gas verwendet, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Beispielsweise weist das Tertiär-Wärmetransportfluid eine Salzschmelze auf oder ist eine Salzschmelze, beispielsweise NaNO₃ und/oder KNO₃ aufweisend.

Weiter vorzugsweise weist das Tertiär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass als Tertiär-Wärmetransportfluid ein Wärmetransportfluid verwendet wird, dessen Wärmekapazität sich von der Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen spezifische Wärmekapazität sich von der spezifischen Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen Dichte sich von der Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen Wärmekapazität und/oder dessen Dichte kleiner als die Wärmekapazität und/oder die Dichte des Sekundär-Wärmetransportfluids ist.

Weiter vorzugsweise ist das Verfahren derart ausgebildet, dass als Tertiär-Wärmetransportfluid ein Wärmetransportfluid verwendet wird, dessen Wärmekapazität und/oder dessen Dichte größer als die Wärmekapazität des Sekundär-Wärmetransportfluids ist.

Der vorliegenden Erfindung liegt ferner die Aufgabe zugrunde, eine Vorrichtung zur Reduktion von Metalloxid bereitzustellen, mittels der im Vergleich zu aus dem Stand der Technik bekannten Vorrichtungen eine erhebliche Reduktion der Emission von Treibhausgasen und insbesondere eine Reduktion der Emission von Kohlendioxid realisiert ist.

Diese der vorliegenden Erfindung zugrundeliegende Aufgabe wird durch eine Vorrichtung mit den in Anspruch 16 angegebenen Merkmalen gelöst. Ausgestaltungen der Vorrichtungen sind in den von Anspruch 16 abhängigen Ansprüchen beschrieben.

Im Genaueren wird die der vorliegenden Erfindung zugrundeliegende Aufgabe durch eine Vorrichtung zur Reduktion von Metalloxid mittels eines reduzierenden Gases oder Gasgemisches gelöst, wobei die Vorrichtung dazu ausgebildet ist, zumindest einen Ausgangsstoff in einem Reaktor zur Erzeugung des reduzierenden Gases oder Gasgemisches mittels zumindest teilweise aus konzentrierter Sonnenstrahlung gewonnener Wärmeenergie zu erwärmen, wobei die Vorrichtung eine Einrichtung zum Zusammenführen des reduzierenden Gases oder Gasgemisches mit dem zu reduzierenden Metalloxid aufweist.

Die erfindungsgemäße Vorrichtung weist den Vorteil auf, dass zum Erwärmen des zumindest einen Ausgangsstoffs erheblich weniger und gegebenenfalls keine Energie benötigt wird, die aus fossilen Brennstoffen oder mittels Kernkraft gewonnen wird. Folglich wird beim Erwärmen des zumindest einen Ausgangsstoffs erheblich weniger und gegebenenfalls kein Kohlendioxid erzeugt.

Aufgrund der Nutzung von konzentrierter Sonnenstrahlung und somit aufgrund der Nutzung von Solarthermie weist die erfindungsgemäße Vorrichtung einen hohen Wirkungsgrad hinsichtlich des zur Erwärmung genutzten Energieanteils der Sonnenstrahlung auf. Aufgrund der Verwendung von konzentrierter Sonnenstrahlung können im Bereich von oder mehr als 30% der Strahlungsenergie der konzentrierten Sonnenstrahlung zur Erwärmung des zumindest einen Ausgangsstoffs genutzt werden. Dieser Wirkungsgrad ist erheblich höher als bei einer Nutzung von Photovoltaik. Denn bei einer Nutzung von Photovoltaik wird Sonnenlicht zur Erzeugung von elektrischer Energie genutzt, wobei im industriellen Maßstab nutzbare Photovoltaikmodule einen Wirkungsgrad von circa 25% aufweisen. Folglich wird lediglich 25% der Energie der Sonnenstrahlung in elektrische Energie umgewandelt. Diese elektrische Energie muss noch in Wärmeenergie umgewandelt werden, was den Gesamtwirkungsgrad bis zur Erwärmung des zumindest einen Ausgangsstoffs nochmals reduziert.

Vorzugsweise ist die Vorrichtung derart ausgebildet, dass als Metalloxid ein Metalloxid verwendet wird, das ausgewählt ist aus der Gruppe bestehend aus Eisenoxid, Aluminiumoxid, Kupferoxid, Magnesiumoxid, Zinnoxid, Zinkoxid und Mischungen davon. Hinsichtlich der der Zusammensetzung des Metalloxids bestehen somit keine Beschränkungen. Das Metalloxid kann beispielsweise in Form von Eisenerz vorliegen.

Wenn das Metalloxid Eisenoxid aufweist, dann kann das Eisenoxid beispielsweise in Form von Eisenerz vorliegen. In diesem Fall ist es auch möglich, die vorliegende Erfindung als Vorrichtung zum Reduzieren von Eisenerz mittels eines reduzierenden Gases oder Gasgemisches zu bezeichnen.

Vorzugsweise ist die Vorrichtung derart ausgebildet, dass als reduzierende Gas oder Gasgemisch ein Gas oder Gasgemisch verwendet wird, das ausgewählt ist aus der Gruppe bestehend aus Wasserstoff, Kohlenmonoxid, Methan, Alkane, Alkene, Wasserdampf, Wasserstoffträger in Form von Wasserstoffverbindungen und Mischungen hiervon. Zum Beispiel sind Alkane, Alkene, Methan Wasserstoffträger in Form von Wasserstoffverbindungen.

In einer bevorzugten Ausführung der Vorrichtung wird die zum Erwärmen des zumindest einen Ausgangsstoffs verwendete Wärmeenergie in Gänze mittels konzentrierter Sonnenstrahlung gewonnen.

Die Einrichtung zum Zusammenführen des reduzierenden Gases oder Gasgemisches mit dem zu reduzierenden Metalloxid kann auch als Reduktionseinrichtung bezeichnet werden. Die Einrichtung zum Zusammenführen des reduzierenden Gases oder Gasgemisches mit dem zu reduzierenden Metalloxid ist als Lichtbogenofen und/oder als Schachtofen und/oder als Wirbelschichtreaktor ausgebildet.

Vorzugsweise ist die Vorrichtung derart ausgebildet, dass der Reaktor dazu ausgebildet ist, mittels konzentrierter Sonnenstrahlung gewonnener Wärmeenergie erwärmt zu werden.

Vorzugsweise weist die Vorrichtung eine Fluiderwärmungseinrichtung auf, die dazu ausgebildet ist, ein Primär-Wärmetransportfluid mittels konzentrierter Sonnenstrahlung zu erwärmen, wobei der Reaktor dazu ausgebildet ist, Wärme des Primär-Wärmetransportfluids zumindest mittelbar auf den zumindest einen Ausgangsstoff zu übertragen.

Die entsprechend ausgebildete Vorrichtung weist einen nochmals verbesserten Wirkungsgrad hinsichtlich der Übertragung der Wärmeenergie auf den zumindest einen Ausgangsstoff auf.

Die Fluiderwärmungseinrichtung ist beispielsweise Teil einer Solarthermieanlage und auf einem Turm angeordnet, der in einem Feld aus Heliostaten angeordnet ist, die Sonnenstrahlung in/auf die Fluiderwärmungseinrichtung reflektieren. Es ist auch möglich, das die Fluiderwärmungseinrichtung im Brennpunkt einer reflektierenden Parabolrinne oder im Brennpunkt einer Fresnelspiegelanordnung oder im Brennpunkt einer Fresnellinsenanordnung angeordnet ist, so dass von der Parabolrinne oder von der Fresnelspiegelanordnung reflektierte Sonnenstrahlung oder von der Fresnellinsenanordnung gesammelte Sonnenstrahlung von dem Primär-Wärmetransportfluid absorbiert werden kann.

Unter einem Reaktor ist eine Einrichtung zu verstehen, in die der zu erwärmende zumindest eine Ausgangsstoff einleitbar ist. Der Reaktor kann beispielsweise derart ausgebildet sein, dass ein vorgegebener Raumbereich auf eine größere Temperatur als eine den vorgegebenen Raumbereich benachbarten Raumbereich erwärmt werden kann. Der Reaktor wird beispielsweise von einem Wärmetransportfluid durchströmt. Erfindungsgemäß bestehen hinsichtlich der Ausgestaltung des Reaktors keinerlei Einschränkungen.

Der Reaktor kann auch als Erwärmungseinrichtung bezeichnet werden.

Die Vorrichtung ist vorzugsweise dazu ausgebildet, das Primär-Wärmetransportfluid mittels der konzentrierten Sonnenstrahlung auf eine Temperatur im Bereich zwischen 500°C bis 1700°C, vorzugsweise im Bereich zwischen 700°C bis 1700°C, weiter vorzugsweise im Bereich zwischen 800°C bis 1650°C, weiter vorzugsweise im Bereich zwischen 900°C bis 1650°C, weiter vorzugsweise im Bereich zwischen 900°C bis 1600°C, weiter vorzugsweise im Bereich zwischen 1100°C bis 1650°C, weiter vorzugsweise im Bereich zwischen 1200°C bis 1600°C, weiter vorzugsweise im Bereich zwischen 1300°C bis 1600°C, weiter vorzugsweise im Bereich zwischen 1400°C bis 1550°C, weiter vorzugsweise im Bereich zwischen 1400°C bis 1500°C zu erwärmen.

Vorzugsweise ist die Vorrichtung derart ausgebildet, dass als Primär-Wärmetransportfluid zumindest ein Gas verwendet wird, ausgewählt aus der Gruppe bestehend aus Wasserstoff, Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Es ist auch möglich, dass das Primär-Wärmetransportfluid eine Salzschmelze aufweist oder eine Salzschmelze ist, wobei die Salzschmelze beispielsweise NaNO₃ und/oder KNO₃ aufweist. Weiter vorzugsweise weist das Primär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist die Vorrichtung derart ausgebildet, dass das Erwärmen des Primär-Wärmetransportfluids unmittelbar in einer von konzentrierter Sonnenstrahlung beschienenen Fluiderwärmungseinrichtung einer Solarthermieanlage erwärmt wird.

Beispielsweise strömt das Primär-Wärmetransportfluid durch die Fluiderwärmungseinrichtung, in die die von Reflektoren reflektierte Sonnenstrahlung konzentriert wird. Dabei wechselwirkt das Primär-Wärmetransportfluid unmittelbar mit der konzentrierten Sonnenstrahlung und wird von dieser erwärmt.

Vorzugsweise ist die Vorrichtung derart ausgebildet, dass ein Primär-Wärmetransportfluid verwendet wird, welches keine Festkörperbestandteile, insbesondere keine Keramikbestandteile aufweist.

Als Primär-Wärmetransportfluid kann beispielsweise ein Gas verwendet werden. Ein Primär-Wärmetransportfluid ohne Festkörperbestandteile weist den Vorteil auf, dass eine Transportvorrichtung (z.B. Rohre bzw. ein Rohrsystem) zum Transport des Wärmetransportfluids einem geringeren Verschleiß ausgesetzt ist. Ferner können sich keine Festkörperbestandteile in Bereichen der Transportvorrichtung ablagern, in denen kleinere Transportgeschwindigkeiten des Wärmetransportfluids vorliegen.

Es ist insbesondere besonders vorteilhaft, wenn das Primär-Wärmetransportfluid keine Keramikbestandteile, insbesondere kein Keramikpulver transportiert. Denn Keramikbestandteile führen zu einem besonders hohen Verschleiß der Transportvorrichtung.

Der Reaktor kann derart ausgebildet sein, dass das Primär-Wärmetransportfluid durch den Reaktor transportiert wird, wobei der Reaktor die so erhaltene Wärmeenergie auf den zumindest einen Ausgangsstoff (beispielsweise mittels Wärmestrahlung) überträgt.

Ferner kann der Reaktor derart ausgebildet sein, dass das Primär-Wärmetransportfluid direkt mit dem zumindest einen Ausgangsstoff in Kontakt bringbar ist, um die Wärmeenergie auf den zumindest einen Ausgangsstoff zu übertragen.

Vorzugsweise weist die Vorrichtung eine Wärmespeichereinrichtung auf, wobei die Vorrichtung dazu ausgebildet ist, Wärmeenergie des Primär-Wärmetransportfluids zumindest mittelbar auf die Wärmespeichereinrichtung zu übertragen.

Die entsprechend ausgebildete Vorrichtung weist den Vorteil auf, dass die Wärmeenergie, die mittels der konzentrierten Sonnenstrahlung gewonnen wird, auch in Zeitperioden verwendet werden kann, in denen keine oder eine vergleichsweise geringere Sonnenstrahlung zur Verfügung steht. Somit ist eine gleichmäßigere Erwärmung des zumindest einen Ausgangsstoffs ermöglicht.

Beispielsweise ist die Vorrichtung derart ausgebildet, dass zum Übertragen von Wärmeenergie der Wärmespeichereinrichtung auf den zumindest einen Ausgangsstoff das Primär-Wärmetransportfluid verwendet wird.

Als Wärmespeichereinrichtung kann beispielsweise ein Reservoir des Primär-Wärmetransportfluids dienen. Ferner kann beispielsweise ein sich von dem Primär-Wärmetransportfluid unterscheidendes Wärmetransportfluid (beispielsweise eine Salzschmelze, beispielsweise NaNO₃ und/oder KNO₃ aufweisend) als Wärmespeichereinrichtung verwendet werden. Ferner kann beispielsweise ein Festkörper als Wärmespeichereinrichtung verwendet werden. Hinsichtlich der Ausgestaltung des Festkörpers bestehen keine Einschränkungen. Der Festkörper kann beispielsweise Steine und/oder Beton und/oder Metallkörper oder dergleichen aufweisen.

Ferner ist es auch im Sinne der erfindungsgemäßen Vorrichtung, dass Wärmeenergie des Primär-Wärmetransportfluids auf ein Sekundär-Wärmetransportfluid und/oder auf ein Tertiär-Wärmetransportfluid übertragen wird, wobei anschließend Wärmeenergie des Sekundär-Wärmetransportfluids und/oder des Tertiär-Wärmetransportfluids auf eine Wärmespeichereinrichtung übertragen wird. Somit wird die Wärmeenergie des Primär-Wärmetransportfluids mittelbar auf die Wärmespeichereinrichtung übertragen.

Vorzugsweise weist die Vorrichtung eine Wärmetauschereinrichtung auf, mittels der Wärmeenergie des Primär-Wärmetransportfluids auf ein Sekundär-Wärmetransportfluid übertragbar ist, wobei der Reaktor dazu ausgebildet ist, Wärme des Sekundär-Wärmetransportfluids zumindest mittelbar auf den zumindest einen Ausgangsstoff zu übertragen.

Die entsprechend ausgebildete Vorrichtung weist den Vorteil auf, dass die Wärmeenergie des Primär-Wärmetransportfluids für die Erwärmung des zumindest einen Ausgangsstoffs, der auf eine bedeutend niedrigere Temperatur als eine Temperatur des Primär-Wärmetransportfluids erwärmt werden soll, verbessert nutzbar ist. Denn die Temperatur des Sekundär-Wärmetransportfluids ist niedriger als die Temperatur des Primär-Wärmetransportfluids.

Wie bereits oben beschrieben kann die Wärmespeichereinrichtung mittels des Sekundär-Wärmetransportfluids erwärmt werden. Ferner ist es auch möglich, dass eine erste Wärmespeichereinrichtung mittels des Primär-Wärmetransportfluids und eine zweite Wärmespeichereinrichtung mittels des Sekundär-Wärmetransportfluids erwärmt wird. Folglich wäre die erste Wärmespeichereinrichtung in einem Primär-Fluidkreislauf und die zweite Wärmespeichereinrichtung in einem Sekundär-Fluidkreislauf angeordnet.

Beispielsweise weist das Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das Sekundär-Wärmetransportfluid eine Metallschmelze auf oder ist eine Metallschmelze. Beispielsweise weist die Metallschmelze Zinn und/oder Zink und/oder Aluminium und/oder Blei auf.

Der Reaktor kann derart ausgebildet sein, dass das Sekundär-Wärmetransportfluid durch den Reaktor transportiert wird, wobei der Reaktor die so erhaltene Wärmeenergie auf den zumindest einen Ausgangsstoff (beispielsweise mittels Wärmestrahlung) überträgt.

Ferner kann der Reaktor derart ausgebildet sein, dass das Sekundär-Wärmetransportfluid direkt mit dem zumindest einen Ausgangsstoff in Kontakt bringbar ist, um die Wärmeenergie auf den zumindest einen Ausgangsstoff zu übertragen.

Vorzugsweise ist die Vorrichtung derart ausgebildet, dass die Fluiderwärmungseinrichtung mit der Wärmetauschereinrichtung mittels des in einem Primär-Fluidkreislauf zirkulierendem Primär-Wärmetransportfluid wärmegekoppelt ist, wobei die Wärmetauschereinrichtung mit dem Reaktor mittels des in einem Sekundär-Fluidkreislauf zirkulierendem Sekundär-Wärmetransportfluid wärmegekoppelt ist, wobei eine Primär-Fluidzulaufleitung des Primär-Fluidkreislaufs, über die das Primär-Wärmetransportfluid von der Fluiderwärmungseinrichtung in Richtung der Wärmetauschereinrichtung transportiert wird, eine erste Länge aufweist, und wobei eine Sekundär-Fluidzulaufleitung des Sekundär-Fluidkreislaufs, über die das Sekundär-Wärmetransportfluid von der Wärmetauschereinrichtung in Richtung des Reaktors transportiert wird, eine zweite Länge aufweist, die größer als die erste Länge ist.

Die entsprechend ausgebildete Vorrichtung ermöglicht einen effizienten Transport der mittels konzentrierter Sonnenstrahlung erzeugten Wärmeenergie mit geringen Wärmeenergieverlusten über eine große Distanz. Folglich ermöglicht die entsprechend ausgebildete Vorrichtung, dass eine Fluiderwärmungseinrichtung, die dazu ausgebildet ist, ein Primär-Wärmetransportfluid mittels konzentrierter Sonnenstrahlung zu erwärmen, einen größeren **Ab**stand zu dem Reaktor, in dem der zumindest eine Ausgangsstoff mittels der durch konzentrierte Sonnenstrahlung gewonnenen Energie erwärmt wird, aufweisen kann.

Dies ist insbesondere vorteilhaft, wenn die konzentrierte Sonnenstrahlung eines Solarturmkraftwerks zum Erwärmen des Primär-Wärmetransportfluids verwendet wird. Ein Solarturmkraftwerk weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass ein Reaktor zum Erwärmen des zu reduzierende Metalloxids und/oder des zur Reduktion des zu reduzierenden Metalloxids verwendete Gas oder Gasgemisch üblicherweise außerhalb einer Fläche platziert werden kann, in der die Reflektoreinrichtungen angeordnet sind. Folglich ermöglicht die beschriebene Vorrichtung eine Vergrößerung des Abstandes Fluiderwärmungseinrichtung zum Reaktor.

Vorzugsweise ist die erste Länge kürzer als 1000 Meter. Weiter vorzugsweise ist die erste Länge kürzer als 800 Meter. Weiter vorzugsweise ist die erste Länge kürzer als 600 Meter. Weiter vorzugsweise ist die erste Länge kürzer als 400 Meter. Weiter vorzugsweise ist die erste Länge kürzer als 200 Meter.

Vorzugsweise beträgt die erste Länge zwischen 100 Meter und 1000 Meter. Weiter vorzugsweise beträgt die erste Länge zwischen 110 Meter und 900 Meter. Weiter vorzugsweise beträgt die erste Länge zwischen 120 Meter und 800 Meter. Weiter vorzugsweise beträgt die erste Länge zwischen 130 Meter und 700 Meter. Weiter vorzugsweise beträgt die erste Länge zwischen 140 Meter und 600 Meter. Weiter vorzugsweise beträgt die erste Länge zwischen 150 Meter und 500 Meter. Weiter vorzugsweise beträgt die erste Länge zwischen 160 Meter und 400 Meter. Weiter vorzugsweise beträgt die erste Länge zwischen 170 Meter und 300 Meter. Weiter vorzugsweise beträgt die erste Länge zwischen 180 Meter und 200 Meter.

Vorzugsweise weist die Vorrichtung eine dritte Wärmetauschereinrichtung auf, mittels der Wärmeenergie des Sekundär-Wärmetransportfluids auf ein Tertiär-Wärmetransportfluid übertragbar ist, wobei der Reaktor dazu ausgebildet ist, Wärme des Tertiär-Wärmetransportfluids zumindest mittelbar auf den zumindest einen Ausgangsstoff zu übertragen.

Beispielsweise wird als Tertiär-Wärmetransportfluid ein Gas verwendet, ausgewählt aus der Gruppe bestehend aus Wasserstoff, Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Beispielsweise weist das Tertiär-Wärmetransportfluid eine Salzschmelze auf oder ist eine Salzschmelze, beispielsweise NaNO₃ und/oder KNO₃ aufweisend.

Weiter vorzugsweise weist das Tertiär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist die Vorrichtung derart ausgebildet, dass als Tertiär-Wärmetransportfluid ein Wärmetransportfluid verwendet wird, dessen Wärmekapazität sich von der Wärmekapazität des Sekundär-Wärmetransportfluids unterscheidet.

Weiter vorzugsweise ist die Vorrichtung derart ausgebildet, dass als Tertiär-Wärmetransportfluid ein Wärmetransportfluid verwendet wird, dessen Dichte sich von der Wärmekapazität des Sekundär-Wärmetransportfluids unterscheidet.

Weiter vorzugsweise ist die Vorrichtung derart ausgebildet, dass als Tertiär-Wärmetransportfluid ein Wärmetransportfluid verwendet wird, dessen Wärmekapazität und/oder dessen Dichte kleiner als die Wärmekapazität des Sekundär-Wärmetransportfluids ist.

Weiter vorzugsweise ist die Vorrichtung derart ausgebildet, dass als Tertiär-Wärmetransportfluid ein Wärmetransportfluid verwendet wird, dessen Wärmekapazität und/oder dessen Dichte größer als die Wärmekapazität des Sekundär-Wärmetransportfluids ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: zeigt ein Verfahrensablaufdiagramm eines erfindungsgemäßen Verfahrens zur Reduktion von Metalloxid mittels eines reduzierenden Gases oder Gasgemisches unter Verwendung von konzentrierter Sonnenstrahlung;
- Figur 2:: zeigt ein Verfahrensablaufdiagramm einer weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 3:: zeigt ein Verfahrensablaufdiagramm einer nochmals weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 4:: zeigt ein Verfahrensablaufdiagramm einer nochmals weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 5:: zeigt ein Verfahrensablaufdiagramm einer nochmals weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 6:: zeigt einen schematischen Aufbau einer Vorrichtung zur Reduktion von Metalloxid mittels eines reduzierenden Gases oder Gasgemisches unter Verwendung von konzentrierter Sonnenstrahlung;
- Figur 7:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer weiteren Ausführungsform der vorliegenden Erfindung;
- Figur 8:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer nochmals weiteren Ausführungsform der vorliegenden Erfindung;
- Figur 9:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer nochmals weiteren Ausführungsform der vorliegenden Erfindung; und
- Figur 10:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer nochmals weiteren Ausführungsform der vorliegenden Erfindung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

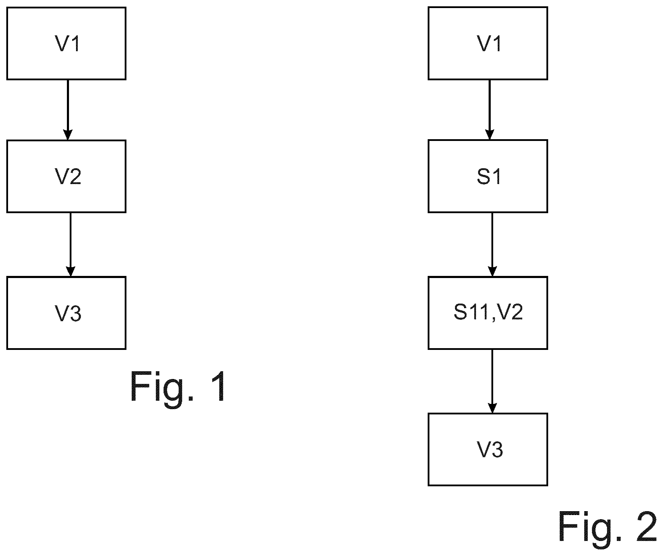

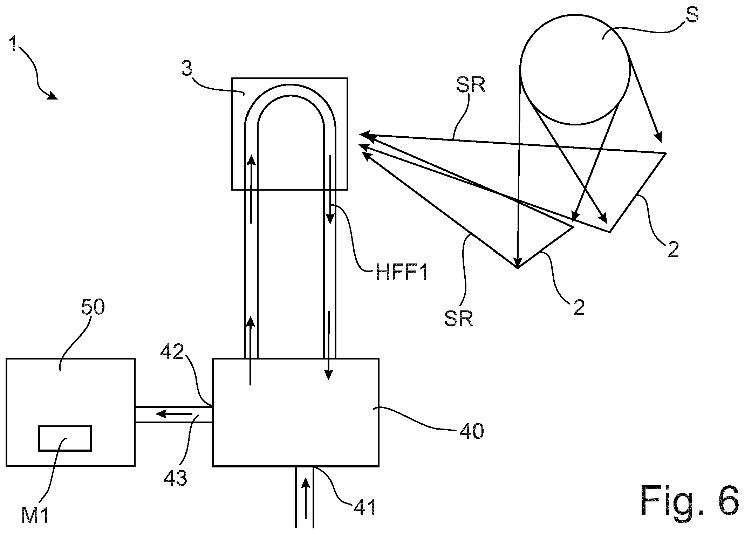

Figur 1 zeigt ein Verfahrensablaufdiagramm eines erfindungsgemäßen Verfahrens zur Reduktion von Metalloxid M1 mittels eines reduzierenden Gases oder Gasgemisches unter Verwendung von konzentrierter Sonnenstrahlung. Das Verfahren kann auf jeder der in den Figuren 6 bis 10 dargestellten Vorrichtungen 1 zur Reduktion von Metalloxid M1 mittels eines reduzierenden Gases oder Gasgemisches unter Verwendung von konzentrierter Sonnenstrahlung gewonnen werden.

In einem Verfahrensschritt V1 wird zumindest ein Ausgangsstoff einem Reaktor 40 zugeführt. In einem sich dem Verfahrensschritt V1 anschließenden Verfahrensschritt V2 wird das reduzierende Gas oder Gasgemisch durch Erwärmen des zumindest einen Ausgangsstoffs mittels Wärmeenergie im Reaktor 40 erzeugt, wobei die Wärmeenergie zumindest teilweise mittels konzentrierter Sonnenstrahlung gewonnen wird. In einem sich dem Verfahrensschritt V2 anschließenden Verfahrensschritt wird das zu reduzierende Metalloxid M1 und das zur Reduktion des zu reduzierenden Metalloxids verwendete Gas oder Gasgemisch zusammengeführt.

Figur 2 zeigt ein Verfahrensablaufdiagramm einer weiteren Ausführungsform des erfindungsgemäßen Verfahrens zur Reduktion von Metalloxid M1 mittels eines reduzierenden Gases oder Gasgemisches unter Verwendung von konzentrierter Sonnenstrahlung. Auch das Verfahren gemäß dem in Figur 2 dargestellten Verfahrensablaufdiagramm kann auf jeder der in den Figuren 6 bis 10 dargestellten Vorrichtungen 1 zur Reduktion von Metalloxid M1 mittels eines reduzierenden Gases oder Gasgemisches unter Verwendung von konzentrierter Sonnenstrahlung ausgeführt werden.

Wie bereits oben beschrieben werden in dem Verfahrensschritt V1 der zumindest eine Ausgangsstoff dem Reaktor 40 zugeführt. In einem Verfahrensschritt S1 wird ein Primär-Wärmetransportfluid HTF1 mittels konzentrierter Sonnenstrahlung erwärmt. Hierzu weist die Vorrichtung 1 eine Fluiderwärmungseinrichtung 3 auf, die dazu ausgebildet ist, ein Primär-Wärmetransportfluid HTF1 mittels konzentrierter Sonnenstrahlung zu erwärmen.

In den in den Figuren 6 bis 10 dargestellten Ausführungsbeispielen der Vorrichtung 1 ist die Fluiderwärmungseinrichtung 3 als Absorberstation 3 ausgebildet, in der von der Sonne S emittierte Sonnenstrahlung SR konzentriert wird. Hierzu wird die Sonnenstrahlung SR von als Heliostaten 2 ausgebildete Reflektionseinrichtungen 2 auf/in die Fluiderwärmungseinrichtung 3 reflektiert. Das Primär-Wärmetransportfluid HTF1 durchläuft die Fluiderwärmungseinrichtung 3 und wird so durch die konzentrierte Sonnenstrahlung SR erwärmt.

Die Vorrichtung 1 weist ferner eine als Reaktor 40 ausgebildete Erwärmungseinrichtung 40 auf, die dazu ausgebildet ist, gemäß eines Verfahrensschritts S11 Wärme des Primär-Wärmetransportfluids HTF1 zumindest mittelbar auf den zumindest einen Ausgansstoff zu übertragen. Hierzu zirkuliert das Primär-Wärmetransportfluid HTF1 zwischen der Fluiderwärmungseinrichtung 3 und dem Reaktor 40. Folglich wird der zumindest eine Ausgangsstoff erwärmt, was dem oben beschriebenen Verfahrensschritt V2 entspricht.

Die Vorrichtung 1 weist ferner eine Einrichtung 50 zum Zusammenführen des reduzierenden Gases oder Gasgemisches mit dem zu reduzierenden Metalloxid M1 auf. Die Einrichtung 50 kann auch als Reduktionseinrichtung 50 bezeichnet werden. Die Einrichtung 50 ist als Lichtbogenofen 50 und/oder als Schachtofen 50 und/oder als Wirbelschichtreaktor 50 ausgebildet.

Der Reaktor 40 weist einen Zufuhranschluss 41 zum Zuführen des zumindest einen Ausgangsstoffs in den Reaktor 40 auf. Ferner weist der Reaktor 40 einen Abfuhranschluss 42 zu Abführen des erzeugten reduzierenden Gases oder Gasgemisches in die Einrichtung 50 über eine mit dem Abfuhranschluss 42 verbundene Fluidleitung 43 auf. In der Einrichtung 50 wird das zu reduzierende Metalloxid M1 mittels des reduzierenden Gases oder Gasgemisches reduziert.

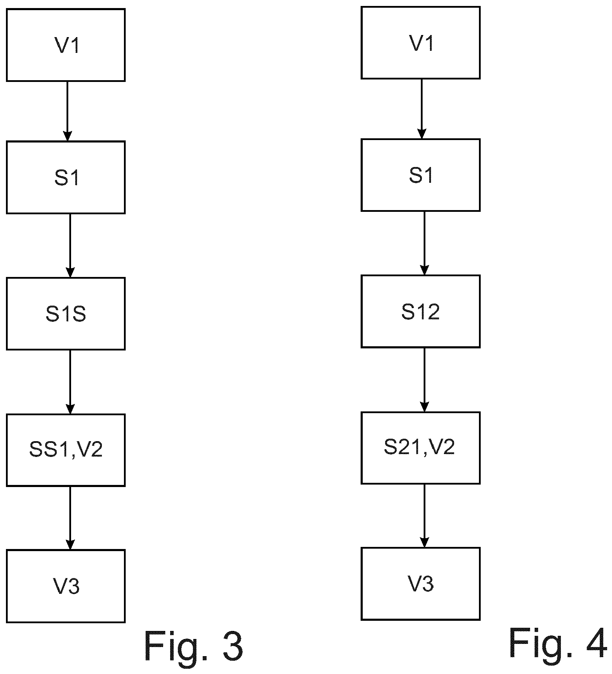

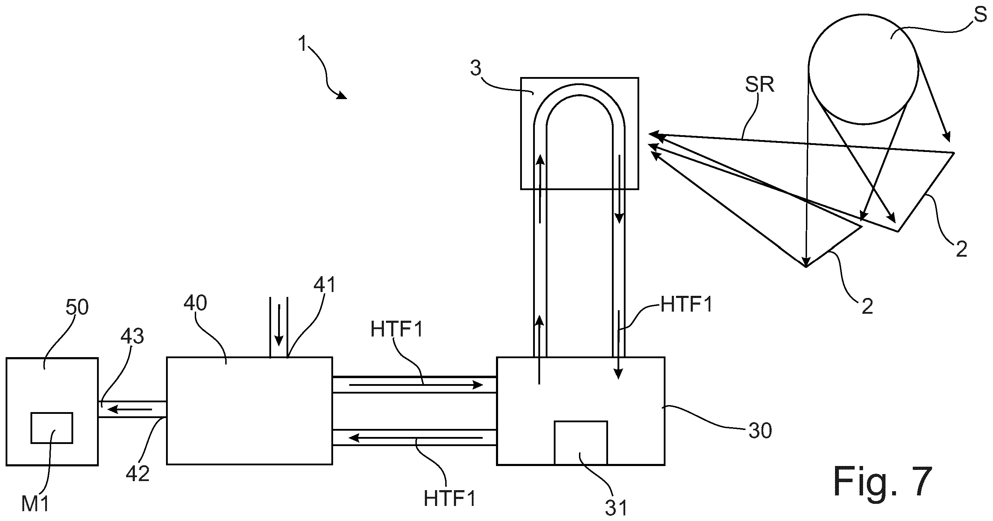

Die in Figur 7 dargestellte Vorrichtung 1 ist dazu ausgebildet, das Verfahren auszuführen, dessen Verfahrensablaufdiagramm in Figur 3 dargestellt ist. Die Verfahrensschritte V1 und S1 sind die gleichen wie bei dem Verfahren, dessen Verfahrensablaufdiagramm in Figur 2 dargestellt ist, so dass auf die diesbezügliche obige Beschreibung verwiesen wird. Die in Figur 7 dargestellte Vorrichtung 1 unterscheidet sich von der in Figur 6 dargestellten Vorrichtung 1 dadurch, dass diese eine Wärmespeichereinrichtung 30 aufweist, wobei in einem Verfahrensschritt S1S Wärmeenergie des Primär-Wärmetransportfluids HTF1 zumindest mittelbar auf die Wärmespeichereinrichtung 30 übertragen wird. In der Wärmespeichereinrichtung 30 ist ein Wärmespeichermedium 31 angeordnet, welches vorzugsweise eine große Wärmekapazität aufweist. Das Primär-Wärmetransportfluid HTF1 kann jedoch auch als Wärmespeichermedium 31 fungieren. Die Wärmespeichereinrichtung 30 wiederum ist mit dem Reaktor 40 wärmegekoppelt, indem ein Wärmetransportfluid zwischen der Wärmespeichereinrichtung 30 und dem Reaktor 40 zirkuliert. Im dargestellten Ausführungsbeispiel zirkuliert das Primär-Wärmetransportfluid HTF1 zwischen der Wärmespeichereinrichtung 30 und dem Reaktor 40, so dass gemäß einem Verfahrensschritt SS1 Wärmeenergie der Wärmespeichereinrichtung 30 auf den zumindest einen Ausgangsstoff übertragen wird. Folglich wird der zumindest eine Ausgangsstoff erwärmt, was dem obigen Verfahrensschritt V2 entspricht. Der Reaktor 40 wird über dessen Zufuhranschluss 41 mit dem zumindest einen Ausgangsstoff gefüllt. Durch Erwärmen des zumindest einen Ausgangsstoffs wird das reduzierende Gas oder Gasgemisch im Reaktor 40 erzeugt und über den Abfuhranschluss 42 und die Fluidleitung 43 in die Einrichtung 50 im Verfahrensschritt V3 eingeführt. In der Einrichtung 50 wird das zu reduzierende Metalloxid M1 mittels des reduzierenden Gases oder Gasgemisches reduziert.

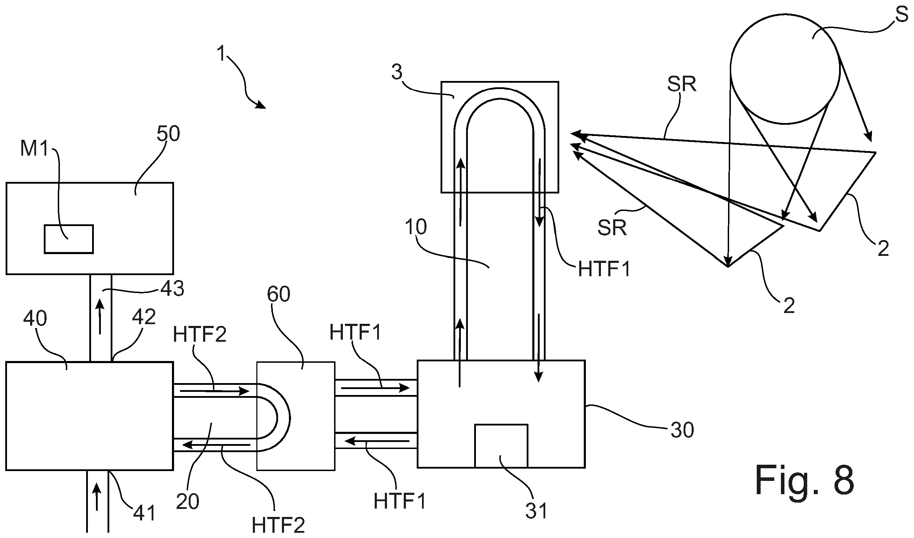

Die in Figur 8 dargestellte Vorrichtung 1 ist dazu ausgebildet, das Verfahren auszuführen, dessen Verfahrensablaufdiagramm in Figur 4 dargestellt ist. Die Verfahrensschritte V1 und S1 sind die gleichen wie bei dem Verfahren, dessen Verfahrensablaufdiagramm in Figur 2 dargestellt ist, so dass auf die diesbezügliche obige Beschreibung verwiesen wird. Die in Figur 8 dargestellte Vorrichtung 1 unterscheidet sich von der in Figur 7 dargestellten Vorrichtung 1 dadurch, dass die Vorrichtung 1 eine Wärmetauschereinrichtung 60 aufweist, mittels der in einem Verfahrensschritt S12 Wärmeenergie des Primär-Wärmetransportfluids HTF1 auf ein Sekundär-Wärmetransportfluid HTF2 übertragbar ist. Hierzu ist die Fluiderwärmungseinrichtung 3 mit der Wärmetauschereinrichtung 60 mittels des in einem Primär-Fluidkreislauf 10 zirkulierendem Primär-Wärmetransportfluid HTF1 wärmegekoppelt. Der Reaktor 40 ist dazu ausgebildet, in einem Verfahrensschritt S21 Wärme des Sekundär-Wärmetransportfluids HTF2 zumindest mittelbar auf den zumindest einen Ausgangsstoff zu übertragen. Hierzu ist die Wärmetauschereinrichtung 60 mit dem Reaktor 40 mittels des in einem Sekundär-Fluidkreislauf 20 zirkulierendem Sekundär-Wärmetransportfluid HTF2 wärmegekoppelt. Folglich wird der zumindest einen Ausgangsstoff erwärmt, was dem obigen Verfahrensschritt V2 entspricht. Der Reaktor 40 wird über dessen Zufuhranschluss 41 mit dem zumindest einen Ausgangsstoff gefüllt. Durch Erwärmen des zumindest einen Ausgangsstoffs wird das reduzierende Gas oder Gasgemisch im Reaktor 40 erzeugt und über den Abfuhranschluss 42 und die Fluidleitung 43 in die Einrichtung 50 im Verfahrensschritt V3 eingeführt. In der Einrichtung 50 wird das zu reduzierende Metalloxid M1 mittels des reduzierenden Gases oder Gasgemisches reduziert.

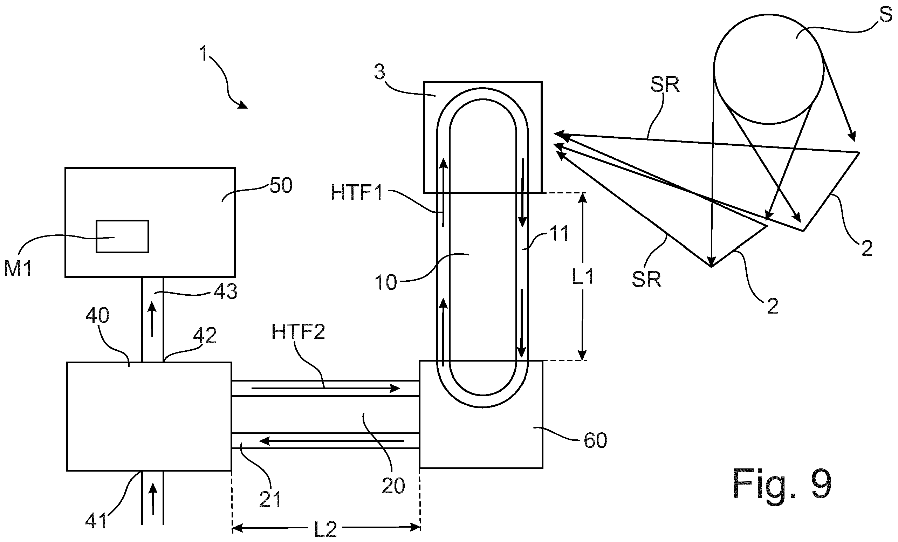

Die in Figur 9 dargestellte Vorrichtung 1 unterscheidet sich von der in Figur 8 dargestellten Vorrichtung 1 dadurch, dass diese keine Wärmespeichereinrichtung 30 aufweist, die zwischen der Fluiderwärmungseinrichtung 3 und der Wärmetauschereinrichtung 60 angeordnet ist. Jedoch kann die in Figur 9 dargestellte Vorrichtung 1 auch die Wärmespeichereinrichtung 30 aufweisen, die die zwischen der Fluiderwärmungseinrichtung 3 und der Wärmetauschereinrichtung 60 angeordnet ist.

Aus Figur 9 ist ersichtlich, dass eine Primär-Fluidzulaufleitung 11 des Primär-Fluidkreislaufs 10, über die das Primär-Wärmetransportfluid HTF1 von der Fluiderwärmungseinrichtung 3 in Richtung der Wärmetauschereinrichtung 60 transportiert wird, eine erste Länge L1 aufweist. Ferner ist aus Figur 9 ersichtlich, dass eine Sekundär-Fluidzulaufleitung 21 des Sekundär-Fluidkreislaufs 20, über die das Sekundär-Wärmetransportfluid HTF2 von der Wärmetauschereinrichtung 60 in Richtung des Reaktors 40 transportiert wird, eine zweite Länge L2 aufweist, die größer als die erste Länge L1 ist.

Folglich wird das Primär-Wärmetransportfluid HTF1 zu der Wärmetauschereinrichtung 60 über eine erste Wegstrecke L1 transportiert, wobei in der Wärmetauschereinrichtung 60 Wärmeenergie von dem Primär-Wärmetransportfluid HTF1 auf das Sekundär-Wärmetransportfluid HTF2 übertragen wird. Ferner wird des Sekundär-Wärmetransportfluids HTF2 zu dem Reaktor 40 über eine zweite Wegstrecke L2 transportiert, die größer als die erste Wegstrecke L1 ist, wobei in dem Reaktor 40 Wärmeenergie von dem Sekundär-Wärmetransportfluid HTF2 auf den zumindest einen Ausgangsstoff übertragen wird.

Vorzugsweise wird als Sekundär-Wärmetransportfluid HTF2 ein Wärmetransportfluid verwendet, dessen Wärmekapazität größer ist als die Wärmekapazität des Primär-Wärmetransportfluids HTF1. Weiter vorzugsweise wird als Sekundär-Wärmetransportfluid HTF2 ein Wärmetransportfluid verwendet, dessen spezifische Wärmekapazität größer ist als die spezifische Wärmekapazität des Primär-Wärmetransportfluids HTF1. Weiter vorzugsweise wird als Sekundär-Wärmetransportfluid HTF2 ein Wärmetransportfluid verwendet, dessen Dichte größer ist als die Dichte des Primär-Wärmetransportfluids HTF1. Weiter vorzugsweise wird als Sekundär-Wärmetransportfluid HTF2 ein Wärmetransportfluid verwendet, dessen Produkt aus dessen Dichte und dessen Wärmekapazität größer ist als die das Produkt aus der Dichte und der Wärmekapazität des Primär-Wärmetransportfluids HTF1.

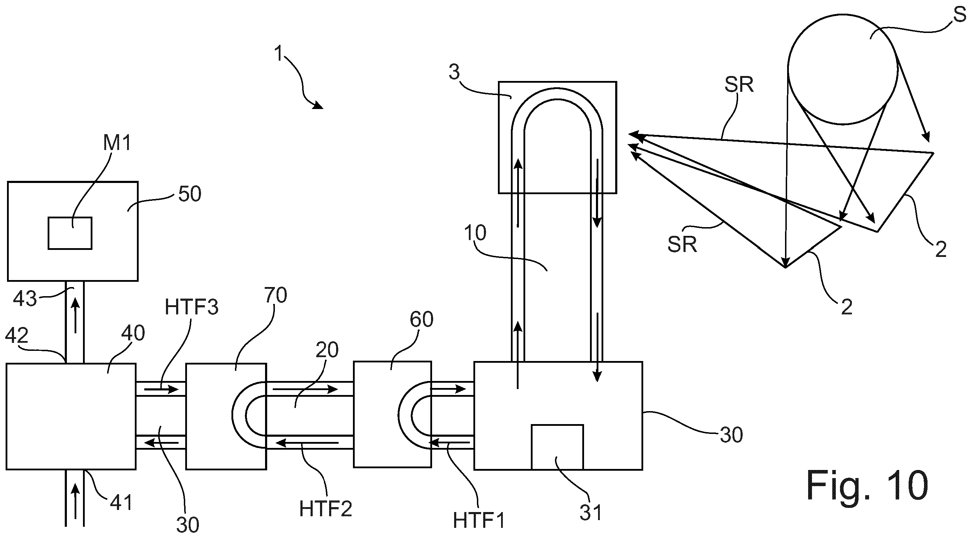

Die Vorrichtung 1, die in Figur 10 dargestellt ist, kann entsprechend ausgebildet sein, so dass die mit Bezug auf Figur 9 beschriebenen Längenverhältnisse der ersten Längen L1 der Primär-Fluidzulaufleitungen 11 und der zweiten Längen L2 der Sekundär-Fluidzulaufleitungen 21 auch bei dem in Figur 10 dargestellten Ausführungsbeispiel der Vorrichtung 1 realisiert sein können.

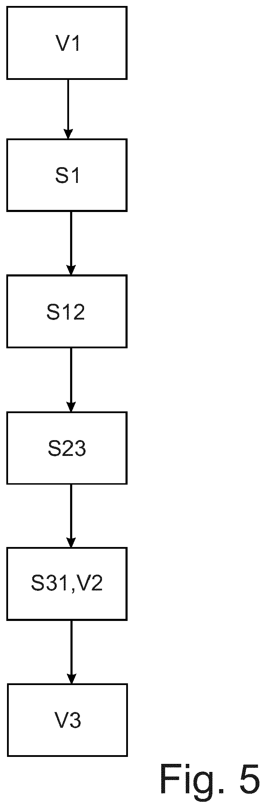

Die in Figur 10 dargestellte Vorrichtung 1 ist dazu ausgebildet, das Verfahren auszuführen, dessen Verfahrensablaufdiagramm in Figur 5 dargestellt ist. Die Verfahrensschritte V1, S1 und S12 sind die gleichen wie bei dem Verfahren, dessen Verfahrensablaufdiagramm in Figur 4 dargestellt ist, so dass auf die diesbezügliche obige Beschreibung verwiesen wird. Die in Figur 10 dargestellte Vorrichtung 1 unterscheidet sich von der in Figur 8 dargestellten Vorrichtung 1 dadurch, dass die Vorrichtung 1 zusätzlich eine zweite Wärmetauschereinrichtung 70 aufweist. In einem Verfahrensschritt S23 wird in der zweiten Wärmetauschereinrichtung 70 Wärmeenergie des Sekundär-Wärmetransportfluids HTF2 auf ein Tertiär-Wärmetransportfluid HTF3 übertragen. Die Erwärmungseinrichtung 40 ist dazu ausgebildet, gemäß eines Verfahrensschritts S31 Wärme des Tertiär-Wärmetransportfluids HTF3 zumindest mittelbar auf den zumindest einen Ausgangsstoff zu übertragen. Folglich wird der zumindest einen Ausgangsstoff erwärmt, was dem obigen Verfahrensschritt V2 entspricht. Der Reaktor 40 wird über dessen Zufuhranschluss 41 mit dem zumindest einen Ausgangsstoff gefüllt. Durch Erwärmen des zumindest einen Ausgangsstoffs wird das reduzierende Gas oder Gasgemisch im Reaktor 40 erzeugt und über den Abfuhranschluss 42 und die Fluidleitung 43 in die Einrichtung 50 im Verfahrensschritt V3 eingeführt. In der Einrichtung 50 wird das zu reduzierende Metalloxid M1 mittels des reduzierenden Gases oder Gasgemisches reduziert.

### Bezugszeichenliste

- 1: Vorrichtung
- 2: Reflektionseinrichtung / Heliostat
- 3: Fluiderwärmungseinrichtung
- 10: Primär-Fluidkreislauf
- 11: Primär-Fluidzulaufleitung
- 12: Primär-Fluidablaufleitung
- 20: Sekundär-Fluidkreislauf
- 21: Sekundär-Fluidzulaufleitung
- 22: Sekundär-Fluidablaufleitung
- 30: Wärmespeichereinrichtung
- 31: Wärmespeichermedium
- 40: Reaktor / Erwärmungseinrichtung
- 41: Zufuhranschluss (des Reaktors)
- 42: Abfuhranschluss (des Reaktors)
- 43: Fluidleitung
- 50: Einrichtung zum Zusammenführen des reduzierenden Gases oder Gasgemisches mit dem zu reduzierenden Metalloxid / Reduktionseinrichtung
- 60: erste Wärmetauschereinrichtung
- 70: zweite Wärmetauschereinrichtung

- HTF1: Primär-Wärmetransportfluid
- HTF2: Sekundär-Wärmetransportfluid
- HTF3: Tertiär-Wärmetransportfluid

- M1: Metalloxid

- L1: erste Wegstrecke / erste Länge
- L2: zweite Wegstrecke / zweite Länge

- S: Sonne
- SR: Sonnenstrahlung
- S1: Verfahrensschritt
- S11: Verfahrensschritt
- S15: Verfahrensschritt
- S21: Verfahrensschritt
- S23: Verfahrensschritt
- S31: Verfahrensschritt
- SS1: Verfahrensschritt
- V1: Verfahrensschritt
- V2: Verfahrensschritt
- V3: Verfahrensschritt

## Patentansprüche

1. Verfahren zur Reduktion von Metalloxid (M1) mittels eines reduzierenden Gases oder Gasgemisches, wobei das Verfahren die nachfolgenden Verfahrensschritte aufweist:
- Zuführen (V1) von zumindest einem Ausgangsstoff in einen Reaktor (40);
- Erzeugen (V2) des reduzierenden Gases oder Gasgemisches durch Erwärmen des zumindest einen Ausgangsstoffs mittels Wärmeenergie im Reaktor (40), wobei die Wärmeenergie zumindest teilweise mittels konzentrierter Sonnenstrahlung gewonnen wird;
- Zusammenführen (V3) des zu reduzierenden Metalloxids (M1) und des zur Reduktion des zu reduzierenden Metalloxids (M1) verwendeten reduzierenden Gases oder Gasgemisches;
- wobei der Verfahrensschritt des Zusammenführens (V3) des zu reduzierenden Metalloxids (M1) und des reduzierenden Gases oder Gasgemisches in einem Lichtbogenofen (50) und/oder in einem Schachtofen (50) und/oder in einem Wirbelschichtreaktor (50) erfolgt.

2. Verfahren nach Anspruch 1, **dadurch gekennzeichnet, dass** der zumindest eine Ausgangsstoff ausgewählt ist aus der Gruppe bestehend aus Erdgas, Wasser, Kohlenstoffdioxid, Abgas einer Metallhütte, Biogas, aus der Erdatmosphäre abgeschiedenes Kohlenstoffdioxid, bei der Zementproduktion erzeugtes Kohlenstoffdioxid, metallurgisches Gas eines Stahlwerks, Koksofengas.

3. Verfahren nach einem der vorhergehenden Ansprüche, **dadurch gekennzeichnet, dass** das reduzierende Gas oder Gasgemisch Synthesegas ist.

4. Verfahren nach einem der vorhergehenden Ansprüche, **gekennzeichnet durch** die folgenden Merkmale:
- im Verfahrensschritt des Zuführens (V1) von zumindest einem Ausgangsstoff in den Reaktor (40) werden zumindest Methan und Wasser als Ausgangsstoffe dem Reaktor (40) zugeführt; und
- im Verfahrensschritt des Erzeugens (V2) des reduzierenden Gases oder Gasgemisches werden Kohlenstoffmonoxid und Wasserstoff als reduzierendes Gasgemisch und Kohlenstoffdioxid erzeugt.

5. Verfahren nach Anspruch 4, **dadurch gekennzeichnet, dass** im Verfahrensschritt des Erzeugens (V2) des reduzierenden Gases oder Gasgemisches die Ausgangsstoffe so erwärmt werden, dass bei einem Gemisch der Ausgangsstoffe, des reduzierenden Gasgemisches und des Kohlenstoffdioxids die Volumenkonzentration des Methans niedriger als 5 Volumenprozent, die Konzentration von Wasserdampf niedriger als 8 Volumenprozent und ein Molverhältnis der Summe des Kohlenstoffmonoxids und des Wasserstoffs zur Summe des Wasserdampfs und Kohlenstoffdioxids größer als 7 ist.

6. Verfahren nach Anspruch 4, **dadurch gekennzeichnet, dass** im Verfahrensschritt des Erzeugens (V2) des reduzierenden Gases oder Gasgemisches die Ausgangsstoffe so erwärmt werden, dass bei einem Gemisch der Ausgangsstoffe, des reduzierenden Gasgemisches und des Kohlenstoffdioxids die Volumenkonzentration des Methans niedriger als 5 Volumenprozent und ein Molverhältnis der Summe des Kohlenstoffmonoxids und des Wasserstoffs zur Summe des Wasserdampfs und Kohlenstoffdioxids größer als 10 ist.

7. Verfahren nach einem der vorhergehenden Ansprüche, **gekennzeichnet durch** die folgenden Merkmale:
- im Verfahrensschritt des Zuführens (V1) von zumindest einem Ausgangsstoff in den Reaktor (40) werden zumindest Methan und Kohlenstoffdioxid als Ausgangsstoffe dem Reaktor (40) zugeführt; und
- im Verfahrensschritt des Erzeugens (V2) des reduzierenden Gases oder Gasgemisches werden Kohlenstoffmonoxid und Wasserstoff als reduzierendes Gasgemisch erzeugt.

8. Verfahren nach einem der vorhergehenden Ansprüche, **gekennzeichnet durch** die folgenden Merkmale:
- Erwärmen (S1) eines Primär-Wärmetransportfluids (HTF1) mittels konzentrierter Sonnenstrahlung; und
- Übertragen (S11, SS1, S21, S31) von Wärmeenergie des Primär-Wärmetransportfluids (HTF1) auf den zumindest einen Ausgangsstoff im Reaktor (40).

9. Verfahren nach Anspruch 8, **gekennzeichnet durch** die folgende
- Übertragen (S1S) von Wärmeenergie des Primär-Wärmetransportfluids (HTF1) auf eine Wärmespeichereinrichtung (30); und
- Übertragen (SS1) von Wärmeenergie der Wärmespeichereinrichtung (30) auf den zumindest einen Ausgangsstoff im Reaktor (40) .

10. Verfahren nach einem der Ansprüche 8 oder 9, **gekennzeichnet durch** die folgenden Merkmale:
- Übertragen (S12) von Wärmeenergie des Primär-Wärmetransportfluids (HTF1) auf ein Sekundär-Wärmetransportfluid (HTF2) in einer Wärmetauschereinrichtung (60); und
- Übertragen (S21) von Wärmeenergie des Sekundär-Wärmetransportfluids (HTF2) auf den zumindest einen Ausgangsstoff im Reaktor (40).

11. Verfahren nach Anspruch 10, **dadurch gekennzeichnet, dass** als Sekundär-Wärmetransportfluid (HTF2) ein Wärmetransportfluid verwendet wird, dessen Wärmekapazität größer ist als die Wärmekapazität des Primär-Wärmetransportfluids (HTF1).

12. Verfahren nach einem der Ansprüche 10 oder 11, **gekennzeichnet durch** die folgenden Schritte:
- Transportieren des Primär-Wärmetransportfluids (HTF1) zu der Wärmetauschereinrichtung (60) über eine erste Wegstrecke (L1), wobei in der Wärmetauschereinrichtung (60) Wärmeenergie von dem Primär-Wärmetransportfluid (HTF1) auf das Sekundär-Wärmetransportfluid (HTF2) übertragen wird; und
- Transportieren des Sekundär-Wärmetransportfluids (HTF2) zum Reaktor (40) über eine zweite Wegstrecke (L2), die größer als die erste Wegstrecke (L1) ist, wobei in dem Reaktor (40) Wärmeenergie von dem Sekundär-Wärmetransportfluid (HTF2) auf den zumindest einen Ausgangsstoff übertragen wird.

13. Verfahren nach einem der Ansprüche 10 bis 12, **gekennzeichnet durch** die folgenden Merkmale:
- Übertragen (S23) von Wärmeenergie des Sekundär-Wärmetransportfluids (HTF2) auf ein Tertiär-Wärmetransportfluid (HTF3) in einer zweiten Wärmetauschereinrichtung (70); und
- Übertragen (S31) von Wärmeenergie des Tertiär-Wärmetransportfluids (HTF3) auf den zumindest einen Ausgangsstoff in dem Reaktor (40).

14. Verfahren nach Anspruch 13, **dadurch gekennzeichnet, dass** als Tertiär-Wärmetransportfluid (HTF3) ein Wärmetransportfluid verwendet wird, dessen Wärmekapazität sich von der Wärmekapazität des Sekundär-Wärmetransportfluids (HTF2) unterscheidet.

15. Vorrichtung (1) zur Reduktion von Metalloxid (M1) mittels eines reduzierenden Gases oder Gasgemisches, wobei die Vorrichtung (1) folgende Merkmale aufweist:
- die Vorrichtung (1) ist dazu ausgebildet, zumindest einen Ausgangsstoff in einem Reaktor (40) zur Erzeugung des reduzierenden Gases oder Gasgemisches mittels zumindest teilweise aus konzentrierter Sonnenstrahlung gewonnener Wärmeenergie zu erwärmen; und
- die Vorrichtung (1) weist eine Einrichtung (50) zum Zusammenführen des reduzierenden Gases oder Gasgemisches mit dem zu reduzierenden Metalloxid (M1) auf;
- wobei die Einrichtung (50) als ein Lichtbogenofen (50) und/oder als ein Schachtofen (50) und/oder als ein Wirbelschichtreaktor (50) ausgebildet ist.

16. Vorrichtung (1) nach Anspruch 15, **gekennzeichnet durch** die folgenden Merkmale:
- die Vorrichtung (1) weist eine Fluiderwärmungseinrichtung (3) auf, die dazu ausgebildet ist, ein Primär-Wärmetransportfluid (HTF1) mittels konzentrierter Sonnenstrahlung zu erwärmen;
- der Reaktor (40) ist dazu ausgebildet, Wärme des Primär-Wärmetransportfluids (HTF1) zumindest mittelbar auf den zumindest einen Ausgangsstoff zu übertragen.

17. Vorrichtung (1) nach Anspruch 16, **dadurch gekennzeichnet, dass** die Vorrichtung (1) eine Wärmespeichereinrichtung (30) aufweist, wobei die Vorrichtung (1) dazu ausgebildet ist, Wärmeenergie des Primär-Wärmetransportfluids (HTF1) zumindest mittelbar auf die Wärmespeichereinrichtung (30) zu übertragen.

18. Vorrichtung (1) nach Anspruch 16 oder 17, **gekennzeichnet durch** die folgenden Merkmale:
- die Vorrichtung (1) weist eine Wärmetauschereinrichtung (60) auf, mittels der Wärmeenergie des Primär-Wärmetransportfluids (HTF1) auf ein Sekundär-Wärmetransportfluid (HTF2) übertragbar ist; und
- der Reaktor (40) ist dazu ausgebildet, Wärme des Sekundär-Wärmetransportfluids (HTF2) zumindest mittelbar auf den zumindest einen Ausgangsstoff zu übertragen.

19. Vorrichtung (1) nach Anspruch 18, **gekennzeichnet durch** die folgenden Merkmale:
- die Fluiderwärmungseinrichtung (3) ist mit der Wärmetauschereinrichtung (60) mittels des in einem Primär-Fluidkreislauf (10) zirkulierendem Primär-Wärmetransportfluids (HTF1) wärmegekoppelt;
- die Wärmetauschereinrichtung (60) ist mit dem Reaktor (40) mittels des in einem Sekundär-Fluidkreislauf (20) zirkulierendem Sekundär-Wärmetransportfluid (HTF2) wärmegekoppelt;
- eine Primär-Fluidzulaufleitung (11) des Primär-Fluidkreislaufs (10), über die das Primär-Wärmetransportfluid (HTF1) von der Fluiderwärmungseinrichtung (3) in Richtung der Wärmetauschereinrichtung (60) transportiert wird, weist eine erste Länge (L1) auf;
- eine Sekundär-Fluidzulaufleitung (21) des Sekundär-Fluidkreislaufs (20), über die das Sekundär-Wärmetransportfluid (HTF2) von der Wärmetauschereinrichtung (60) in Richtung des Reaktors (40) transportiert wird, weist eine zweite Länge (L2) auf, die größer als die erste Länge (L1) ist.

20. Vorrichtung (1) nach Anspruch 18 oder 19, **gekennzeichnet durch** die folgenden Merkmale:
- die Vorrichtung (1) weist eine zweite Wärmetauschereinrichtung (70) auf, mittels der Wärmeenergie des Sekundär-Wärmetransportfluids (HTF2) auf ein Tertiär-Wärmetransportfluid (HTF3) übertragbar ist; und
- der Reaktor (40) ist dazu ausgebildet, Wärme des Tertiär-Wärmetransportfluids (HTF3) zumindest mittelbar auf das zu reduzierende Metalloxid (M1) und/oder auf den zumindest einen Ausgangsstoff zu übertragen.

## Claims

1. A method for reducing metal oxide (M1) using a reducing gas or gas mixture, the method comprising the following steps:
- feeding (V1) at least one feedstock into a reactor (40);
- Generating (V2) the reducing gas or gas mixture by heating the at least one feedstock using thermal energy in the reactor (40), wherein the thermal energy is obtained at least in part by means of concentrated solar radiation;
- Combining (V3) the metal oxide (M1) to be reduced and the reducing gas or gas mixture used to reduce the metal oxide (M1);
- wherein the process step of combining (V3) the metal oxide (M1) to be reduced and the reducing gas or gas mixture takes place in an arc furnace (50) and/or in a shaft furnace (50) and/or in a fluidized-bed reactor (50).

2. Method according to claim 1, **characterised in that** the at least one feedstock is selected from the group consisting of natural gas, water, carbon dioxide, exhaust gas from a metal smelter, biogas, carbon dioxide captured from the Earth's atmosphere, carbon dioxide produced during cement production, metallurgical gas from a steelworks, and coke oven gas.

3. Method according to one of the preceding claims, **characterised in that** the reducing gas or gas mixture is synthesis gas.

4. Method according to one of the preceding claims, **characterised by** the following features:
- in the process step of feeding (V1) at least one feedstock into the reactor (40), at least methane and water are fed into the reactor (40) as feedstocks; and
- in the process step of generating (V2) the reducing gas or gas mixture, carbon monoxide and hydrogen are generated as the reducing gas mixture, and carbon dioxide is generated.

5. Method according to claim 4, **characterised in that**, in the process step of producing (V2) the reducing gas or gas mixture, the feedstocks are heated such that, in a mixture of the feedstocks, the reducing gas mixture and carbon dioxide, the volume concentration of methane is less than 5 per cent by volume, the concentration of water vapour is less than 8 per cent by volume, and the molar ratio of the sum of carbon monoxide and hydrogen to the sum of water vapour and carbon dioxide is greater than 7.

6. Method according to claim 4, **characterised in that**, in the process step of producing (V2) the reducing gas or gas mixture, the feedstocks are heated such that, in a mixture of the feedstocks, the reducing gas mixture and carbon dioxide, the volume concentration of methane is less than 5 per cent by volume and the molar ratio of the sum of carbon monoxide and hydrogen to the sum of water vapour and carbon dioxide is greater than 10.

7. Method according to any one of the preceding claims, **characterised by** the following features:
- in the process step of feeding (V1) at least one feedstock into the reactor (40), at least methane and carbon dioxide are fed into the reactor (40) as feedstocks; and
- in the process step of producing (V2) the reducing gas or gas mixture, carbon monoxide and hydrogen are produced as the reducing gas mixture.

8. Method according to any one of the preceding claims, **characterised by** the following features:
- heating (S1) a primary heat transfer fluid (HTF1) by means of concentrated solar radiation; and
- transferring (S11, SS1, S21, S31) thermal energy from the primary heat transfer fluid (HTF1) to the at least one feedstock in the reactor (40).

9. Method according to claim 8, **characterised by** the following
- transferring (S1S) thermal energy from the primary heat transfer fluid (HTF1) to a heat storage device (30); and
- transferring (SS1) thermal energy from the heat storage device (30) to the at least one feedstock in the reactor (40).

10. Method according to one of claims 8 or 9, **characterised by** the following features:
- Transferring (S12) thermal energy from the primary heat transfer fluid (HTF1) to a secondary heat transfer fluid (HTF2) in a heat exchanger (60); and
- Transferring (S21) thermal energy from the secondary heat transfer fluid (HTF2) to the at least one feedstock in the reactor (40).

11. Method according to claim 10, **characterised in that** a heat transfer fluid is used as the secondary heat transfer fluid (HTF2), the heat capacity of which is greater than the heat capacity of the primary heat transfer fluid (HTF1).

12. Method according to any one of claims 10 or 11, **characterised by** the following steps:
- Transporting the primary heat transfer fluid (HTF1) to the heat exchanger (60) via a first path (L1), wherein, in the heat exchanger (60), thermal energy is transferred from the primary heat transfer fluid (HTF1) to the secondary heat transfer fluid (HTF2); and
- transporting the secondary heat transfer fluid (HTF2) to the reactor (40) via a second path (L2), which is longer than the first path (L1), whereby, in the reactor (40), thermal energy is transferred from the secondary heat transfer fluid (HTF2) to the at least one feedstock.

13. Method according to any one of claims 10 to 12, **characterised by** the following features:
- transferring (S23) thermal energy from the secondary heat transfer fluid (HTF2) to a tertiary heat transfer fluid (HTF3) in a second heat exchanger (70); and
- transferring (S31) thermal energy from the tertiary heat transfer fluid (HTF3) to the at least one feedstock in the reactor (40).

14. Method according to claim 13, **characterised in that** a heat transfer fluid is used as the tertiary heat transfer fluid (HTF3), the heat capacity of which differs from the heat capacity of the secondary heat transfer fluid (HTF2).

15. Apparatus (1) for the reduction of metal oxide (M1) by means of a reducing gas or gas mixture, wherein the apparatus (1) comprises the following features:
- the apparatus (1) is designed to heat at least one feedstock in a reactor (40) for the production of the reducing gas or gas mixture using thermal energy derived at least in part from concentrated solar radiation; and
- the apparatus (1) comprises means (50) for bringing the reducing gas or gas mixture into contact with the metal oxide (M1) to be reduced;
- wherein the means (50) is designed as an arc furnace (50) and/or as a shaft furnace (50) and/or as a fluidized-bed reactor (50).

16. Apparatus (1) according to claim 15, **characterised by** the following features:
- the apparatus (1) comprises a fluid heating device (3) which is designed to heat a primary heat transfer fluid (HTF1) by means of concentrated solar radiation;
- the reactor (40) is designed to transfer heat from the primary heat transfer fluid (HTF1) at least indirectly to the at least one feedstock.

17. Apparatus (1) according to claim 16, **characterised in that** the apparatus (1) comprises a heat storage device (30), wherein the apparatus (1) is adapted to transfer thermal energy from the primary heat transfer fluid (HTF1) at least indirectly to the heat storage device (30).

18. Apparatus (1) according to claim 16 or 17, **characterised by** the following features:
- the device (1) comprises a heat exchanger (60) by means of which thermal energy from the primary heat transfer fluid (HTF1) can be transferred to a secondary heat transfer fluid (HTF2); and
- the reactor (40) is designed to transfer heat from the secondary heat transfer fluid (HTF2) at least indirectly to the at least one feedstock.

19. Apparatus (1) according to claim 18, **characterised by** the following features:
- the fluid heating device (3) is thermally coupled to the heat exchanger device (60) by means of the primary heat transfer fluid (HTF1) circulating in a primary fluid circuit (10);
- the heat exchanger (60) is thermally coupled to the reactor (40) by means of the secondary heat transfer fluid (HTF2) circulating in a secondary fluid circuit (20);
- a primary fluid supply line (11) of the primary fluid circuit (10), via which the primary heat transfer fluid (HTF1) is transported from the fluid heating device (3) towards the heat exchanger (60), has a first length (L1);
- a secondary fluid supply line (21) of the secondary fluid circuit (20), through which the secondary heat transfer fluid (HTF2) is transported from the heat exchanger (60) towards the reactor (40), has a second length (L2) which is greater than the first length (L1).

20. Apparatus (1) according to claim 18 or 19, **characterised by** the following features:
- the apparatus (1) comprises a second heat exchanger (70) by means of which thermal energy from the secondary heat transfer fluid (HTF2) can be transferred to a tertiary heat transfer fluid (HTF3); and
- the reactor (40) is designed to transfer heat from the tertiary heat transfer fluid (HTF3) at least indirectly to the metal oxide (M1) to be reduced and/or to the at least one starting material.

## Revendications

1. Procédé pour la réduction d'oxyde métallique (M1) au moyen d'un gaz ou mélange de gaz réducteur, dans lequel le procédé présente les étapes de procédé suivantes :
- acheminement (V1) d'au moins une matière première dans un réacteur (40) ;
- génération (V2) du gaz ou mélange de gaz réducteur en chauffant l'au moins une matière première au moyen d'une énergie thermique dans le réacteur (40), dans lequel l'énergie thermique est obtenue, au moins en partie, au moyen d'un rayonnement solaire concentré ;
- réunion (V3) de l'oxyde métallique (M1) à réduire et du gaz ou mélange de gaz réducteur utilisé pour la réduction de l'oxyde métallique (M1) à réduire ;
- dans lequel l'étape de procédé de réunion (V3) de l'oxyde métallique (M1) à réduire et du gaz ou mélange de gaz réducteur est effectuée dans un four à arc (50) et/ou dans un four à cuve (50) et/ou dans un réacteur à lit fluidisé (50).

2. Procédé selon la revendication 1, **caractérisé en ce que** l'au moins une matière première est choisie dans le groupe constitué de gaz naturel, eau, dioxyde de carbone, gaz d'échappement d'une usine métallurgique, biogaz, dioxyde de carbone isolé de l'atmosphère terrestre, dioxyde de carbone généré lors de la production de ciment, gaz métallurgique d'une usine sidérurgique et gaz de cokerie.

3. Procédé selon l'une des revendications précédentes,
**caractérisé en ce que** le gaz ou mélange de gaz réducteur est du gaz de synthèse.

4. Procédé selon l'une des revendications précédentes, **caractérisé par** les caractéristiques suivantes :
- à l'étape de procédé d'acheminement (V1) d'au moins une matière première dans le réacteur (40), au moins du méthane et de l'eau sont acheminés dans le réacteur (40) en tant que matières premières ; et
- à l'étape de procédé de génération (V2) du gaz ou mélange de gaz réducteur sont générés du monoxyde de carbone et de l'hydrogène en tant que mélange de gaz réducteur et du dioxyde de carbone.

5. Procédé selon la revendication 4, **caractérisé en ce que**, à l'étape de procédé de génération (V2) du gaz ou mélange de gaz réducteur, les matières premières sont chauffées de sorte que, dans un mélange des matières premières, du mélange de gaz réducteur et du dioxyde de carbone, la concentration volumique du méthane est inférieure à 5 pour cent en volume, la concentration en vapeur d'eau est inférieure à 8 pour cent en volume et un rapport molaire entre la somme du monoxyde de carbone et de l'hydrogène et la somme de la vapeur d'eau et du dioxyde de carbone est supérieur à 7.

6. Procédé selon la revendication 4, **caractérisé en ce que**, à l'étape de procédé de génération (V2) du gaz ou mélange de gaz réducteur, les matières premières sont chauffées de sorte que, dans un mélange des matières premières, du mélange de gaz réducteur et du dioxyde de carbone, la concentration volumique du méthane est inférieure à 5 pour cent en volume et un rapport molaire entre la somme du monoxyde de carbone et de l'hydrogène et la somme de la vapeur d'eau et du dioxyde de carbone est supérieur à 10.

7. Procédé selon l'une des revendications précédentes, **caractérisé par** les caractéristiques suivantes :
- à l'étape de procédé d'acheminement (V1) d'au moins une matière première dans le réacteur (40), au moins du méthane et du dioxyde de carbone sont acheminés dans le réacteur (40) en tant que matières premières ; et
- à l'étape de procédé de génération (V2) du gaz ou mélange de gaz réducteur sont générés du monoxyde de carbone et de l'hydrogène en tant que mélange de gaz réducteur.

8. Procédé selon l'une des revendications précédentes, **caractérisé par** les caractéristiques suivantes :
- chauffage (S1) d'un fluide de transport de chaleur primaire (HTF1) au moyen d'un rayonnement solaire concentré ; et
- transfert (S11, SS1, S21, S31) de l'énergie thermique du fluide de transport de chaleur primaire (HTF1) à l'au moins une matière première dans le réacteur (40).

9. Procédé selon la revendication 8, **caractérisé par** ce qui suit
- transfert (S1S) de l'énergie thermique du fluide de transport de chaleur primaire (HTF1) à un appareil d'accumulation de chaleur (30) ; et
- transfert (SS1) de l'énergie thermique de l'appareil d'accumulation de chaleur (30) à l'au moins une matière première dans le réacteur (40).

10. Procédé selon l'une des revendications 8 ou 9, **caractérisé par** les caractéristiques suivantes :
- transfert (S12) de l'énergie thermique du fluide de transport de chaleur primaire (HTF1) à un fluide de transport de chaleur secondaire (HTF2) dans un appareil d'échange de chaleur (60) ; et
- transfert (S21) de l'énergie thermique du fluide de transport de chaleur secondaire (HTF2) à l'au moins une matière première dans le réacteur (40).

11. Procédé selon la revendication 10, **caractérisé en ce que**
un fluide de transport de chaleur dont la capacité thermique est supérieure à la capacité thermique du fluide de transport de chaleur primaire (HTF1) est utilisé comme fluide de transport de chaleur secondaire (HTF2).

12. Procédé selon l'une des revendications 10 ou 11, **caractérisé par** les caractéristiques suivantes :
- transport du fluide de transport de chaleur primaire (HTF1) vers l'appareil d'échange de chaleur (60) sur une première distance (L1), dans lequel, dans l'appareil d'échange de chaleur (60), l'énergie thermique est transférée du fluide de transport de chaleur primaire (HTF1) au fluide de transport de chaleur secondaire (HTF2) ; et
- transport du fluide de transport de chaleur secondaire (HTF2) vers le réacteur (40) sur une seconde distance (L2) qui est supérieure à la première distance (L1), dans lequel, dans le réacteur (40), l'énergie thermique est transférée du fluide de transport de chaleur secondaire (HTF2) à l'au moins une matière première.

13. Procédé selon l'une des revendications 10 à 12, **caractérisé par** les caractéristiques suivantes :
- transfert (S23) de l'énergie thermique du fluide de transport de chaleur secondaire (HTF2) à un fluide de transport de chaleur tertiaire (HTF3) dans un second appareil d'échange de chaleur (70) ; et
- transfert (S31) de l'énergie thermique du fluide de transport de chaleur tertiaire (HTF3) à l'au moins une matière première dans le réacteur (40).

14. Procédé selon la revendication 13, **caractérisé en ce qu'**un fluide de transport de chaleur dont la capacité thermique est différente de la capacité thermique du fluide de transport de chaleur secondaire (HTF2) est utilisé comme fluide de transport de chaleur tertiaire (HTF3).

15. Dispositif (1) pour la réduction d'oxyde métallique (M1) au moyen d'un gaz ou mélange de gaz réducteur, dans lequel le dispositif (1) présente les caractéristiques suivantes :
- le dispositif (1) est conçu pour chauffer au moins une matière première dans un réacteur (40) pour la génération du gaz ou mélange de gaz réducteur au moyen d'une énergie thermique obtenue, au moins en partie, à partir d'un rayonnement solaire concentré ; et
- le dispositif (1) présente un appareil (50) pour la réunion du gaz ou mélange de gaz réducteur avec l'oxyde métallique (M1) à réduire ;
- dans lequel l'appareil (50) est conçu sous forme de four à arc (50) et/ou de four à cuve (50) et/ou de réacteur à lit fluidisé (50).

16. Dispositif (1) selon la revendication 15, **caractérisé par** les caractéristiques suivantes :
- le dispositif (1) présente un appareil de chauffage de fluide (3) qui est conçu pour chauffer un fluide de transport de chaleur primaire (HTF1) au moyen d'un rayonnement solaire concentré ;
- le réacteur (40) est conçu pour transférer, au moins indirectement, de la chaleur du fluide de transport de chaleur primaire (HTF1) à l'au moins une matière première.

17. Dispositif (1) selon la revendication 16, **caractérisé en ce que** le dispositif (1) présente un appareil d'accumulation de chaleur (30), dans lequel le dispositif (1) est conçu pour transférer, au moins indirectement, l'énergie thermique du fluide de transport de chaleur primaire (HTF1) à l'appareil d'accumulation de chaleur (30).

18. Dispositif (1) selon la revendication 16 ou 17, **caractérisé par** les caractéristiques suivantes :
- le dispositif (1) présente un appareil d'échange de chaleur (60) au moyen duquel l'énergie thermique du fluide de transport de chaleur primaire (HTF1) peut être transférée à un fluide de transport de chaleur secondaire (HTF2) ; et
- le réacteur (40) est conçu pour transférer, au moins indirectement, de la chaleur du fluide de transport de chaleur secondaire (HTF2) à l'au moins une matière première.

19. Dispositif (1) selon la revendication 18, **caractérisé par** les caractéristiques suivantes :
- l'appareil de chauffage de fluide (3) est accouplé thermiquement à l'appareil d'échange de chaleur (60) au moyen du fluide de transport de chaleur primaire (HTF1) circulant dans un circuit de fluide primaire (10) ;
- l'appareil d'échange de chaleur (60) est accouplé thermiquement au réacteur (40) au moyen du fluide de transport de chaleur secondaire (HTF2) circulant dans un circuit de fluide secondaire (20) ;
- une conduite d'amenée de fluide primaire (11) du circuit de fluide primaire (10), par l'intermédiaire de laquelle le fluide de transport de chaleur primaire (HTF1) est transporté depuis l'appareil de chauffage de fluide (3) en direction de l'appareil d'échange de chaleur (60), présente une première longueur (L1) ;
- une conduite d'amenée de fluide secondaire (21) du circuit de fluide secondaire (20), par l'intermédiaire de laquelle le fluide de transport de chaleur secondaire (HTF2) est transporté depuis l'appareil d'échange de chaleur (60) en direction du réacteur (40), présente une seconde longueur (L2) qui est supérieure à la première longueur (L1).

20. Dispositif (1) selon la revendication 18 ou 19, **caractérisé par** les caractéristiques suivantes :
- le dispositif (1) présente un second appareil d'échange de chaleur (70) au moyen duquel l'énergie thermique du fluide de transport de chaleur secondaire (HTF2) peut être transférée à un fluide de transport de chaleur tertiaire (HTF3) ; et
- le réacteur (40) est conçu pour transférer, au moins indirectement, de la chaleur du fluide de transport de chaleur tertiaire (HTF3) à l'oxyde métallique (M1) à réduire et/ou à l'au moins une matière première.
